# EUROPÄISCHE PATENTSCHRIFT

(11) **EP 3 967 413 B1**
(45) Veröffentlichungstag und Bekanntmachung des Hinweises auf die Patenterteilung: **31.05.2023**
(21) Anmeldenummer: 20195574.7
(22) Anmeldetag: 10.09.2020
(51) Int. Cl.: B07C 5/342, B07C 5/02

(54) **SORTIERVORRICHTUNG UND -VERFAHREN MIT EINER LIBS-LASERVORRICHTUNG**
SORTING APPARATUS WITH LIBS LASER DEVICE AND METHOD
APPAREIL ET PROCÉDÉ DE TRI DOTÉ D'UN DISPOSITIF LASER LIBS

(43) Veröffentlichungstag der Anmeldung: 16.03.2022
(73) Patentinhaber: Binder + Co AG, 8200 Gleisdorf (AT)
(72) Erfinder: Huber, Reinhold, 8280 Fürstenfeld (AT); Taucher, Reinhard, 8010 Graz (AT)
(74) Vertreter: KLIMENT & HENHAPEL

(56) Entgegenhaltungen:
- EP-B1- 3 352 919

## Beschreibung

### GEBIET DER ERFINDUNG

Die Erfindung betrifft eine Sortiervorrichtung zum Sortieren von Objekten, die Sortiervorrichtung umfassend zumindest
- eine Rutsche, auf welcher Rutsche die Objekte nacheinander durch die einwirkende Gravitationskraft in einer Förderrichtung bewegbar sind, wobei die zumindest eine Rutsche eine Aussparung umfassend einen Messbereich aufweist,
- eine LIBS-Laservorrichtung, wobei die LIBS-Laservorrichtung, benachbart zur Aussparung der Rutsche angeordnet ist, um eine spektroskopische Vermessung der sich entlang der Rutsche bewegenden Objekte durch die Aussparung hindurch durchzuführen,
- eine Trenneinrichtung zum Aussortieren bestimmter Objekte, sowie
- eine Steuereinrichtung zur Steuerung und/oder Regelung der Trenneinrichtung in Abhängigkeit von den Messergebnissen der LIBS-Laservorrichtung. Die Erfindung betrifft auch ein Verfahren zum Sortieren.

### STAND DER TECHNIK

Im Stand der Technik ist der Einsatz von LIBS (engl. Laser Induced Breakdown Spectroscopy; laserinduzierte Plasmaspektroskopie) im Zusammenhang mit Sortiervorrichtungen bereits bekannt. Das LIBS-Verfahren wird insbesondere im Zusammenhang mit der Sortierung von Metallen und Erzen verwendet, um eine rasche Analyse der vorliegenden Metalle bzw. Erze zu erhalten. LIBS ist ein Analyseverfahren, bei dem ein gepulster, fokussierter Laserstrahl auf der Materialoberfläche eines Objekts ein kleines Gebiet extrem erhitzt, ein Plasma erzeugt und danach eine quantitative, elementbezogene Spektralanalyse des Plasmas ermöglicht.

Die Messung der Intensitäten einzelner Spektrallinien verschiedener Elemente erlaubt Rückschlüsse auf die atomare Zusammensetzung des Objekts. Das so aufgenommene Spektrum des Materials kann zur Identifikation von Materialien, zur Bestimmung des Gehalts an bestimmten chemischen Elementen oder chemischen Verbindungen im Objekt und damit quasi als Fingerabdruck für eine bestimmte Art von Objekten herangezogen werden.

Um die zu sortierenden Objekte mittels LIBS-Laservorrichtung in der Sortiervorrichtung vermessen zu können, sind im Stand der Technik konkave Rutschen bekannt, auf denen die Objekte, vorzugsweise mittels Gravitationskraft, bewegt werden, sodass sie sich an der LIBS-Laservorrichtung vorbeibewegen, die unter der Rutsche angeordnet ist, siehe etwa EP 3 158 324 B1 und EP 3 352 919 B1.

Nachteilig an konkaven Rutschen ist, dass durch die konkave Form der Rutsche zu sortierende Objekte, je nach deren Form und Größe, unterschiedlich weit vom Boden der Rutsche und damit unterschiedlich weit von der LIBS-Laservorrichtung beabstandet vorliegen, weswegen es zu Fokussierungsproblemen des LIBS-Lasers kommt, wodurch die Messergebnisse der LIBS-Laservorrichtung oft mangelhaft sind.

### AUFGABE DER ERFINDUNG

Es ist Aufgabe der gegenständlichen Erfindung, die Nachteile des Standes der Technik zu überwinden und eine verbesserte Sortiervorrichtung mittels LIBS-Laservorrichtung zur Verfügung zu stellen.

### DARSTELLUNG DER ERFINDUNG

Die Aufgabe der Erfindung wird gelöst durch eine Sortiervorrichtung zum Sortieren von Objekten, die Sortiervorrichtung umfassend zumindest
- eine Rutsche, auf welcher Rutsche die Objekte nacheinander durch die einwirkende Gravitationskraft in einer Förderrichtung bewegbar sind, wobei die Rutsche eine Aussparung umfassend einen Messbereich aufweist,
- eine LIBS-Laservorrichtung, wobei die LIBS-Laservorrichtung benachbart zur Aussparung der Rutsche angeordnet ist, um eine spektroskopische Vermessung der sich entlang der Rutsche bewegenden Objekte durch die Aussparung hindurch durchzuführen,
- eine Trenneinrichtung zum Aussortieren bestimmter Objekte, sowie
- eine Steuereinrichtung zur Steuerung und/oder Regelung der Trenneinrichtung in Abhängigkeit von den Messergebnissen der LIBS-Laservorrichtung, wobei erfindungsgemäß vorgesehen ist, dass die Rutsche zumindest zwei Abschnitte umfasst, wobei der erste Abschnitt, durch den die Objekte zuerst bewegbar sind, derart ausgebildet ist, dass die sich entlang des ersten Abschnitts bewegenden Objekte mittels Gravitationskraft normal zur Förderrichtung zentriert werden, und der zweite Abschnitt der Rutsche eben ausgebildet ist, und dass die Aussparung umfassend den Messbereich im zweiten Abschnitt der Rutsche angeordnet ist.

Eine Rutsche ist ein Element, das im Betriebszustand zumindest abschnittsweise geneigt angeordnet ist und auf dem Objekte allein durch die Gravitation entlang gleiten können, wobei die Objekte sich durch einen ersten Abschnitt und anschließend durch einen zweiten Abschnitt auf der Rutsche bewegen. Erster und zweiter Abschnitt weisen eine unterschiedliche Form des Querschnitts normal zur Förderrichtung auf.

Unter einem ersten Abschnitt, in dem sich darin entlang bewegende Objekte mittels Gravitationskraft normal zur Förderrichtung zentriert werden, werden insbesondere solche Abschnitte verstanden, durch deren Form die Objekte durch die einwirkende Gravitationskraft quer zur Förderrichtung in die Mitte des ersten Abschnitts befördert werden. Zentriert werden Objekte durch die Gravitationskraft in der Regel dann, wenn der erste Abschnitt zwei zueinander geneigte Teil-Förderflächen aufweist, welche Teil der gesamten Förderfläche sind. Die geneigten Teil-Förderflächen, welche im Querschnitt gerade oder gekrümmt sein können, stehen miteinander in der Regel an einem tiefsten Bereich der Rutsche in Verbindung. In einem Querschnitt des ersten Abschnitts normal zur Förderrichtung entspricht der tiefste Bereich der Rutsche einem tiefsten Punkt oder einem tiefsten Abschnitt.

Die geneigten Teil-Förderflächen sind in der Regel - betrachtet in einem Querschnitt des ersten Abschnitts normal zur Förderrichtung - symmetrisch zueinander angeordnet, insbesondere symmetrisch zu einer im Betriebszustand der Sortiervorrichtung senkrechten Ebene, die in Förderrichtung verläuft. Es ist aber nicht ausgeschlossen, dass die geneigten Teil-Förderflächen nicht symmetrisch zueinander angeordnet sind, indem diese - betrachtet in einem Querschnitt des ersten Abschnitts normal zur Förderrichtung - z.B. jeweils einen unterschiedlichen Winkel aufweisen zu einer im Betriebszustand der Sortiervorrichtung senkrechten Ebene, die in Förderrichtung verläuft (etwa ein V-förmiger Querschnitt, der zur Seite gekippt ist); oder z.B. zwar den gleichen Winkel aufweisen zu der im Betriebszustand der Sortiervorrichtung senkrechten Ebene, die in Förderrichtung verläuft, aber im Querschnitt eine unterschiedliche Länge aufweisen (etwa ein V-förmiger Querschnitt mit ungleich hohen Seitenwänden); oder z.B. sowohl unterschiedliche Winkel als auch unterschiedliche Längen im Querschnitt aufweisen (etwa ein zur Seite gekippter V-förmiger Querschnitt mit ungleich hohen Seitenwänden).

Die Objekte werden durch die geneigten Teil-Förderflächen und die auf die Objekte einwirkende Gravitationskraft zum tiefsten Punkt bzw. Bereich des Querschnitts der Rutsche befördert. Die Objekte nähern sich daher, während sie entlang der Förderrichtung durch den ersten Abschnitt rutschen, immer mehr dem tiefsten Punkt der Rutsche an. Als Förderfläche wird hier jene Oberfläche der Rutsche verstanden, auf der die Objekte aufgrund der Gravitationskraft aufliegen können.

Insofern kann in einer Ausführungsform der Erfindung vorgesehen sein, dass der erste Abschnitt, genauer dessen Förderfläche, konkav ausgebildet ist, indem die Förderfläche des ersten Abschnitts, betrachtet in einem Schnitt normal zur Förderrichtung, zumindest abschnittweise, nämlich bezogen auf Abschnitte des normal zur Förderrichtung verlaufenden Querschnitts, geneigt angeordnet ist, und dass der zweite Abschnitt keine Förderfläche aufweist, die in einem Schnitt normal zur Förderrichtung betrachtet geneigt angeordnet ist.

Durch diese konkave Ausformung des ersten Abschnitts der Rutsche wird erreicht, dass ein Objekt in diesem ersten Abschnitt auf Grund der geneigten Förderflächen mittels Gravitationskraft zentriert wird. Dadurch ist im zweiten Abschnitt der Rutsche, wo die spektroskopische Messung erfolgt, eine konkave Ausformung nicht mehr erforderlich.

Unter einer konkaven Ausbildung des ersten Abschnitts der Rutsche mit einer zumindest abschnittsweise geneigten Förderfläche wird in diesem Zusammenhang verstanden, dass der in einer Ebene rechtwinkelig zur Förderrichtung liegende Querschnitt der Rutsche eine Vertiefung für zu sortierende Objekte bildet und dieser Querschnitt zumindest einen geneigten Abschnitt aufweist.

Der Querschnitt des ersten Abschnitts der Rutsche, genauer der Querschnitt der Förderfläche, kann z.B. U-förmig sein, V-förmig, kann die Form eines Kreisbogens, z.B. eines Halbkreises, haben, kann die Form eines Polygonzuges haben, z.B. eines Polygonzugs, der sich einer Kreisbogenform annähert. Der Querschnitt des ersten Abschnitts der Rutsche kann aber nicht rechtwinkelig sein, also keine im Betriebszustand der Sortiervorrichtung ebene, im Querschnitt horizontale Förderfläche mit senkrechten Seitenwänden aufweisen: denn ein Objekt würde nur zwischen den Seitenwänden hin- und hergeworfen werden, aber nicht in der Mitte des ersten Abschnitts zentriert werden.

Es ist nicht ausgeschlossen, dass erster und/oder zweiter Abschnitt der Rutsche zumindest in einem Längsabschnitt einen geschlossenen Querschnitt aufweisen, der die zu sortierenden Objekte normal zur Förderrichtung allseits umschließt. Die Rutsche wäre dann in diesem Längsabschnitt ein Rohr, z.B. mit einem kreisförmigen Querschnitt; oder mit einem dreieckigen Querschnitt, indem ein V-förmiger Querschnitt zusätzlich oben geschlossen wird.

Der zweite Abschnitt der Rutsche ist eben ausgebildet, weist also eine ebene Förderfläche auf, weil eine Zentrierung des Objektes nicht mehr weiter erforderlich ist, da die Zentrierung im ersten Abschnitt der Rutsche erfolgt und sich das Objekt, wenn es vom ersten Abschnitt in den zweiten Abschnitt gelangt, auf dieser vom ersten Abschnitt vorgegebenen Bahn in Förderrichtung im zweiten Abschnitt weiterbewegt, und zwar über den Messbereich der Aussparung.

Unter einer ebenen Ausbildung des zweiten Abschnitts der Rutsche wird in diesem Zusammenhang verstanden, dass der in einer Ebene rechtwinkelig zur Förderrichtung liegende Querschnitt der Rutsche, genauer der Förderfläche, als Gerade ausgebildet ist. Diese Gerade ist im Betriebszustand der Sortiervorrichtung horizontal ausgerichtet. Es sind im zweiten Abschnitt, im Betriebszustand und im Querschnitt gesehen, keine geneigten Förderflächen vorhanden.

Um die Objekte mittels Sortiervorrichtung sortieren zu können, werden die Objekte zeitlich nacheinander pro Rutsche vermessen, insbesondere spektroskopisch vermessen. In Förderrichtung der Objekte gesehen kann vor der mindestens einen Rutsche auch eine Einrichtung zur Vereinzelung der Objekte vorgesehen sein. Als Einrichtung zur Vereinzelung der Objekte kann z.B. eine Rüttelrinne und/oder ein Förderband vorgesehen sein, und/oder eine im Betriebszustand der Sortieranlage schräg ausgerichtete Platte, mittels der die zu sortierenden Objekte vereinzelt werden können, sodass sie einzeln in den ersten Abschnitt der Rutsche gelangen. Entsprechende Einrichtungen zur Vereinzelung der Objekte sind aus dem Stand der Technik bereits bekannt.

Nacheinander vermessen bedeutet, dass dabei nicht mehrere Objekte aufeinander vorliegen, oder, normal zur Förderrichtung gesehen, nebeneinander vorliegen. Am besten weisen die einzelnen Objekte in Förderrichtung einen Abstand zueinander auf, um als einzelne Objekte erkannt werden zu können.

Als zu sortierende Objekte kommen insbesondere Objekte aus Metall bzw. Metallgemischen sowie Objekte aus Erz bzw. Erzgemischen oder Ausbruchmaterial aus Feuerfestmaterial, insbesondere zum Recycling der Auskleidungen von Schmelzöfen, in Betracht. Es ist jedoch nicht ausgeschlossen, dass auch Objekte aus anderen Materialien mit der Sortiervorrichtung sortiert werden, solange sie mit der erfindungsgemäßen Vorrichtung identifiziert bzw. vermessen werden können.

Objekte können aus unterschiedlichen Materialien, beispielsweise aus zwei, drei oder noch mehr verschiedenen Materialien bestehen, oder nur aus einem Material. Als Material wird hier ein chemisches Element oder eine chemische Verbindung verstanden. Der Objektstrom, der gegebenenfalls durch die Einrichtung zum Vereinzeln der Objekte erzeugt wird, kann auch ausschließlich aus Objekten bestehen, die alle ein bestimmtes Material enthalten. Dann würde man den Objektstrom etwa in Fraktionen mit unterschiedlichem Gehalt an diesem Material, wie in der Erzaufbereitung erforderlich, sortieren. Der Objektstrom kann aber auch Objekte aus verschiedenen Materialien enthalten, wie unterschiedliche Erze oder unterschiedliche Metalle, die dann mit Hilfe der Sortiereinrichtung in unterschiedliche Materialfraktionen sortiert werden. Jede Materialfraktion könnte ihrerseits weiter in Fraktionen mit unterschiedlichem Gehalt an diesem Material sortiert werden. Es könnte mit der erfindungsgemäßen Vorrichtung z.B. Objekte mit unterschiedlichem Gehalt eines bestimmten Elements voneinander getrennt werden. Es ist auch möglich, unterschiedliche Metallarten bzw. Metalllegierungen zu sortieren, beispielsweise Aluminiumlegierungen. Des Weiteren kann das erfindungsgemäße Verfahren zur Feststellung von Störstoffen im Objektstrom herangezogen werden, wobei ein Störstoff ein Objekt ist, das keines der gewünschten Materialien enthält. Die Störstoffe können, wenn gewünscht, ebenfalls mittels LIBS-Analyse genau identifiziert werden. Es versteht sich von selbst, dass Aufbau und Ausstattung der Vorrichtung, insbesondere die Laserleistung und die Wellenlänge des Detektors, jeweils an das zu sortierende Material bzw. an die zu sortierenden Objekte abgestimmt werden.

Das erfindungsgemäße Verfahren umfasst auch den Fall, dass nicht alle Störstoffe bzw. Objekte, die die dem gesuchten Kriterium (Material, Gehalt usw.) entsprechen, entsprechend aussortiert werden, es also zu Fehlern bei der Sortierung kommen kann. Eine solche Über- oder Untersortierung der Objekte stellt somit keine Abweichung vom Erfindungsgedanken dar.

Erfindungsgemäß umfasst die Sortiervorrichtung zumindest eine Rutsche. Rutschen, auf denen Objekte mittels Gravitationskraft bewegbar sind, sind im Stand der Technik hinlänglich bekannt, etwa in Form von Rinnen oder schiefen Ebenen. Rutschen, wie sie zusammen mit Sortiervorrichtungen des Stands der Technik verwendet werden, dienen dazu, die mittels LIBS-Laservorrichtung zu vermessenden Objekte mittig zu halten, so dass diese in der Sortiervorrichtung geführt werden und von einer LIBS-Laservorrichtung bestrahlt werden können. Die aus EP 3 158 324 B1 und EP 3 352 919 B1 bekannten Rutschen bestehen aus einem einzigen Abschnitt in dem Sinn, dass sich der Querschnitt der Rutsche über die Länge der Rutsche nicht ändert.

Der Ort des Objekts auf der Rutsche, und damit sein Eintreffen bei der Trenneinrichtung, kann in der Regel mittels der LIBS-Messung der LIBS-Laservorrichtung erfolgen: im Zeitpunkt der LIBS-Messung befindet sich ein bestimmtes Objekt im Messbereich und es kann bestimmt werden, wann dieses Objekt bei der Trenneinrichtung einlangt. Vor allem bei der kontinuierlichen LIBS-Messung wäre es grundsätzlich auch möglich, die Länge eines Objekts durch die LIBS-Messung zu bestimmen, da die Frequenz der kontinuierlichen LIBS-Messung bekannt ist und man aus mehreren aufeinanderfolgenden LIBS-Messungen darauf schließen kann, dass es sich um ein Objekt mit entsprechender Länge handelt.

Es kann bei der erfindungsgemäßen Vorrichtung aber auch eine eigene Objekterkennungseinrichtung vorgesehen sein, welche dazu ausgebildet ist, zumindest die Lage eines Objekts auf der Rutsche, also die Orientierung des Objekts relativ zur Rutsche, und zusätzlich die Form und die Abmessungen des Objekts zu erfassen. Das bedeutet, dass die Objekterkennungseinrichtung beispielsweise erkennen kann, wie das Objekt relativ zum Messbereich und/oder zur Trenneinrichtung liegt, etwa, ob ein Objekt quer zur Förderrichtung liegt. Generell nimmt die Objekterkennungseinrichtung nur ein zweidimensionales Bild auf, es ist jedoch natürlich nicht ausgeschlossen, dass auch dreidimensionale Bilder erstellt werden. Die erfindungsgemäße Steuereinrichtung zur Steuerung und/oder Regelung der Trenneinrichtung würde gegebenenfalls in Abhängigkeit von den Messergebnissen der Objekterkennungseinrichtung und der LIBS-Laservorrichtung gesteuert werden. Die Steuereinrichtung könnte auch, sollte es erforderlich sein, eine eigenständige Regelung der Trenneinrichtung, z.B. der Luftmenge einer Ausblasvorrichtung, vornehmen, unabhängig von den Messergebnissen der Objekterkennung und/oder der LIBS-Laservorrichtung.

Als Objekterkennungseinrichtung kommen insbesondere eine VIS-Kamera und eine LED- und/oder Laser-Beleuchtung in Betracht, sodass zwei- oder dreidimensionale Abbildungen der Objekte erstellt werden können, aber selbstverständlich ist auch eine andere Vorrichtung zur Erkennung von Objekten von der Verwendung im Zusammenhang mit der vorliegenden Erfindung nicht ausgeschlossen. Es ist auch nicht ausgeschlossen, dass die Objekterkennungseinrichtung mehr Parameter als lediglich die Lage eines Objekts erfasst, beispielsweise die Größe (Länge und/oder Breite) und/oder die Form und/oder die Farbe und/oder spektrale Eigenschaften im NIR-Bereich (wenn die Objekterkennungseinrichtung eine NIR-Kamera enthält) und/oder die Struktur und/oder die Höhe des Objekts. Es versteht sich von selbst, dass die Höhe lediglich aus dreidimensionalen Bildern oder aus mehreren zweidimensionalen Bildern ermittelt werden kann.

Eine eigene Objekterkennungseinrichtung kann die Klassifikation der Objekte verbessern, indem mehr Information über die Beschaffenheit der Objekte zur Verfügung gestellt wird. Sie kann die Trennung verbessern, weil die Trennvorrichtung auf die Lage und/oder die Form der Objekte reagieren kann.

Falls eine Objekterkennungseinrichtung vorhanden ist, kann diese auch - anstatt der Verwendung der LIBS-Laservorrichtung hierzu - den momentanen Ort der Objekte bestimmen, sodass die Steuereinrichtung berechnen kann, wann dieses Objekt bei der Trenneinrichtung einlangen wird.

Eine Objekterkennungseinrichtung kann grundsätzlich für alle Sortiervorrichtungen verwendet werden, welche eine LIBS-Laservorrichtung umfassen, sie ist nicht auf Sortiervorrichtungen mit einer Rutsche oder mit einer erfindungsgemäßen Rutsche beschränkt.

Die erfindungsgemäße Sortiervorrichtung umfasst eine LIBS-Laservorrichtung, um eine Analyse des sich auf der Rutsche an der LIBS-Laservorrichtung vorbeibewegenden Objekts durchzuführen. Die LIBS-Laservorrichtung umfasst dabei zumindest einen Laser sowie einen Detektor, um die Messung des Spektrums durchzuführen. Mit der LIBS-Laservorrichtung ist es entweder möglich, das Objekt über das Spektrum der einzelnen enthaltenen chemischen Elemente lediglich zu identifizieren und/oder aber eine quantitative Analyse durchzuführen. Dies bedeutet, dass mit der LIBS-Laservorrichtung einerseits bestimmt werden kann, ob das Objekt das vorher festgelegte Material aufweist, also ein bestimmtes chemisches Element oder eine bestimmte chemische Verbindung, und andererseits auch welchen Gehalt an diesem chemischen Element oder an dieser chemischen Verbindung das Objekt aufweist.

Um die LIBS-Messung durchführen zu können, ist in der Rutsche eine Aussparung umfassend einen Messbereich vorgesehen. Die Aussparung muss jedenfalls solche Abmessungen aufweisen, dass der Laserstrahl zur Durchführung der laserinduzierten Plasmaspektroskopie zum Objekt gelangen kann und auch die Vermessung des durch den Laserstrahl entstehenden Plasmas möglich ist. Der Messbereich befindet sich dort, wo im Betriebszustand der Vorrichtung der Laserstrahl durch die Aussparung tritt. Dies bedeutet, dass die Aussparung hinsichtlich ihrer Größe entweder dem Messbereich entspricht, oder aber größer ist als der Messbereich. Der Messbereich legt jedoch jedenfalls fest, wo die LIBS-Vermessung der Objekte erfolgt.

Die erfindungsgemäße Sortiervorrichtung umfasst weiter eine Trenneinrichtung, die ein Objekt, das als ein bestimmtes Material, z.B. ein bestimmtes Metall bzw. ein bestimmtes Erz, enthaltend definiert worden ist, von anderen Objekten des Objektstroms trennt, wenn die LIBS-Analyse ein entsprechendes Ergebnis geliefert hat, wobei im Ergebnis der LIBS-Analyse auch das Ergebnis der Auswertung einer gegebenenfalls vorhandenen Objekterkennungseinrichtung, etwa die Größe und/oder die Farbe des Objekts, enthalten sein kann.

Ob beim Trennen die werthaltigen aus den nicht werthaltigen Objekten aussortiert werden oder umgekehrt, ist nicht wesentlich und hängt etwa davon ab, welche der beiden Fraktionen die größere Anzahl an Objekten aufweist oder wird durch qualitative Aspekte bestimmt. Das Aussortieren einer Fraktion kann etwa durch Ausblasdüsen mittels Druckluft erfolgen. Selbstverständlich ist nicht ausgeschlossen, dass andere Trenneinrichtungen als Ausblasdüsen zum Aussortieren der Objekte verwendet werden.

Es ist auch nicht ausgeschlossen, dass von der Trennvorrichtung mehr als eine Fraktion aussortiert wird, sodass beispielsweise zwei verschiedene Metalle oder Erze getrennt aussortiert werden.

Die erfindungsgemäße Rutsche unterscheidet sich von Rutschen, welche aus dem Stand der Technik bekannt sind, da sie zumindest zwei Abschnitte umfasst, wobei der zweite Abschnitt der Rutsche eben ausgebildet ist. Dadurch, dass der zweite Abschnitt eben ausgebildet ist, wird erreicht, dass die zu sortierenden Objekte vollständig oder zumindest mit mehreren Auflagepunkten auf der Förderfläche der Rutsche aufliegen, wobei die Auflagepunkte alle den gleichen Normalabstand zur LIBS-Laservorrichtung haben. Dies führt zu einer höheren Messgenauigkeit, da die LIBS-Analyse eine möglichst konstante Beabstandung vom Objekt zur Laservorrichtung erfordert. Bei einer konkaven Rutsche besteht die Möglichkeit, dass das zu vermessende Objekt nicht auf dem - im Querschnitt gesehen - tiefsten Punkt der Rutsche aufliegt und dadurch weiter weg von der Laservorrichtung ist. Somit variiert in Abhängigkeit von der Objektform und der Objektgröße der Messabstand zum Laser. Für eine geringe Varianz der vorgenommenen Messungen ist jedoch ein enges Kornband bzw. eine geringe Objektgrößenvarianz erforderlich. Wird dies nicht erfüllt, werden die Messungen negativ beeinflusst oder uneinheitliche Messungen durchgeführt, womit eine höhere Fehleranfälligkeit einhergeht.

Erfindungsgemäß ist weiters vorgesehen, dass die Aussparung zur Durchführung der LIBS-Vermessung im zweiten Abschnitt der Rutsche angeordnet ist. Damit wird sichergestellt, dass einerseits die Objekte vereinzelt vorliegen und damit nacheinander vermessen werden können, und andererseits wird sichergestellt, dass die Objekte durch die ebene Ausgestaltung des zweiten Abschnitts immer im Wesentlichen denselben Abstand, mit geringerer Abhängigkeit von Objektgröße oder - form, zur LIBS-Laservorrichtung aufweisen, da alle Auflagepunkt der Objekte in der Ebebne des zweiten Abschnitt liegen. Die Aussparung wird in der Regel mittig in der Rutsche angeordnet sein, also mit gleichem Abstand zu den Seiten der Rutsche.

Selbstverständlich kann jedoch nicht ausgeschlossen werden, dass einige Objekte auf Grund ihrer besonderen äußeren Form dort, wo der Laserstrahl auf sie auftrifft, einen Abstand zur ebenen Förderfläche des zweiten Abschnitts haben.

Prinzipiell erfolgt das Sortieren der Materialien so, dass zunächst ein Objektstrom aus einzelnen Objekten hergestellt wird, um die Objekte nacheinander vermessen zu können. Die Objekte gelangen dann nacheinander auf die Rutsche und bewegen sich durch die Schwerkraft längs der Rutsche. Der konkave erste Abschnitt der Rutsche zentriert die Objekte normal zur Förderrichtung in der Mitte der Rutsche, und damit auch über dem Messbereich im zweiten Abschnitt der Rutsche.

Es kann vorgesehen sein, dass eine Objekterkennungseinrichtung zunächst jedes einzelne Objekt erfasst und Daten an die von der Vorrichtung ebenfalls umfasste Steuereinrichtung vermittelt. In diesem Fall leitet die Steuereinrichtung dann nach Erhalt der Daten der Objekterkennungseinrichtung ein Signal an die LIBS-Laservorrichtung, sodass die LIBS-Messung im richtigen Augenblick startet, für den Fall, dass die LIBS-Laservorrichtung ausgebildet ist, Laserstrahlung nur bei Vorhandensein eines Objekts an der Aussparung abzugeben.

Es kann allerdings auch sein, dass keine Objekterkennung vor, sondern erst nach bzw. gleichzeitig mit der LIBS-Lasermessung erfolgt. In diesem Fall wird von der LIBS-Laservorrichtung kontinuierlich gepulst Laserstrahlung abgegeben. Die LIBS-Messung erfolgt ebenfalls kontinuierlich, wobei eine erfolgreiche Vermessung mit entsprechenden Daten lediglich erhalten werden kann, wenn sich ein Objekt im Messbereich befindet. Anderenfalls werden nur sogenannte Leermessungen durchgeführt. Nach der LIBS-Messung erhält die Steuereinrichtung Daten der LIBS-Laservorrichtung und/oder der Objekterkennungseinrichtung, wenn diese gleichzeitig mit der LIBS-Vermessung bzw. nach dieser erfolgt, und sendet ergebnisabhängig ein entsprechendes Signal an die Trenneinrichtung, welche die Objekte dann etwa durch Ausblasen in die entsprechenden Fraktionen aufteilt, z.B. in verschiedene Container verbringt.

Als Steuereinrichtung kommt insbesondere ein Computer in Betracht, der eine automatisierte Steuerung und/oder Regelung der erfindungsgemäßen Sortiervorrichtung ermöglicht. Die erfindungsgemäße Sortiervorrichtung ist daher in der Lage einerseits das Objekt zu identifizieren, d.h. festzustellen, ob das Objekt das gewünschte Material aufweist, und andererseits auch den gegebenenfalls enthaltenen Gehalt an diesem Material zu ermitteln. Darüber hinaus ist die Steuereinrichtung in der Lage, Signale bzw. Daten der LIBS-Laservorrichtung sowie der Objekterkennungseinrichtung, falls vorhanden, auszuwerten und die Trenneinrichtung dementsprechend zu instruieren.

In einer Ausführungsform der Erfindung ist vorgesehen, dass die Rutsche eine Breite aufweist und der zweite Abschnitt der Rutsche ein unteres Ende aufweist und dass der Messbereich der Aussparung zumindest eine halbe Breite der Rutsche über dem unteren Ende des zweiten Abschnitts der Rutsche angeordnet ist, um sicherzustellen, dass der Messabstand, also der Abstand zwischen LIBS-Laser und dem im Messbereich befindlichen Objekt, möglichst konstant ist, weil das Objekt auf der Rutsche aufliegt. Hingegen würde der Messabstand stärker variieren, wenn die LIBS-Messung erst am Ende der Rutsche durchgeführt wird oder gar erst, nachdem das Objekt die Rutsche verlassen hat.

Dadurch, dass die Vermessung des Objekts zumindest eine halbe Breite der Rutsche über dem unteren Rand des zweiten Abschnitts erfolgt, wird jedenfalls auch das Risiko verringert, dass das Objekt auf Grund der Geschwindigkeit, mit der es sich auf der Rutsche bewegt, bereits an der Trennvorrichtung vorbei ist, bevor diese ein Signal zur Aussortierung von der Steuereinrichtung erhält.

In einer Ausführungsform der Erfindung ist vorgesehen, dass die Aussparung der Rutsche bis zum unteren Ende des zweiten Abschnitts der Rutsche in Form eines Schlitzes in Förderrichtung verläuft, wobei der Messbereich der Aussparung in Förderrichtung gesehen vom unteren Ende des zweiten Abschnitts der Rutsche entfernt ist, insbesondere am vom unteren Ende des zweiten Abschnitts der Rutsche am weitesten beabstandeten Bereich des Schlitzes angeordnet ist. Dadurch wird verhindert, dass angesammelter Staub bzw. sonstige Verschmutzungen die LIBS-Messung beeinträchtigen.

Durch die offene Schlitzform der Aussparung wird verhindert, dass Verunreinigungen, die durch die zu sortierenden Objekte auf die Rutsche gebracht werden, sich am Ende der Aussparung in der Aussparung anlagern. Zudem wird verhindert, dass sich die Objekte am - hier eben nicht vorhandenen - unteren Rand der Aussparung verhaken und dadurch die Detektion und/oder Trennung der Objekte negativ beeinflussen.

Eine andere Ausführungsform der Erfindung sieht vor, dass sich an die Aussparung in Förderrichtung, insbesondere bis zum unteren Ende des zweiten Abschnitts der Rutsche, eine Vertiefung anschließt. Das bedeutet, dass die Aussparung am unteren Ende des zweiten Abschnitts geschlossen ist und nicht offen wie bei einem offenen Schlitz. Den Abschluss der Aussparung bildet z.B. ein Steg, der in der Ebene des zweiten Abschnitts liegt, wodurch eine Abschirmung des Lasers erfolgt und verhindert wird, dass Objekte durch die Aussparung in Richtung des Lasers ragen können und der Laser beschädigt werden könnte, und/oder dass Staub durch die Aussparung zum Laser gelangen und diesen verschmutzen könnte.

Auch bei dieser Ausführungsform wird verhindert, dass sich die Objekte am unteren Rand der Aussparung verhaken und dadurch die Detektion und/oder Trennung der Objekte negativ beeinflussen. Die Breite der Vertiefung, gemessen normal zur Förderrichtung, entspricht vorzugsweise der Breite der Aussparung, gemessen normal zur Förderrichtung. Die Breite der Aussparung beträgt in der Regel einen Bruchteil der Breite des zweiten Abschnitts der Rutsche. Die Breite der Aussparung beträgt in der Regel weniger als 50% der minimalen Objektgröße. Geht man davon aus, dass die Breite des zweiten Abschnitts zumindest das Doppelte des größten zu sortierenden Objekts beträgt, beträgt die Breite der Aussparung somit in der Regel weniger als 25% der Breite des zweiten Abschnitts, z.B. weniger als 15% der Breite des zweiten Abschnitts, insbesondere weniger als 12%, vorzugsweise weniger als 10%.

Der Steg hat in einer Ausführungsform der Erfindung eine Dicke, die im Vergleich zur Materialdicke des zweiten Abschnitts außerhalb der Aussparung vermindert ist, sodass sich in Fortsetzung der Aussparung eine Vertiefung in der Förderfläche der Rutsche ausbildet. Durch diese Ausführung kann sich einerseits weniger Verschmutzung in der Aussparung ansammeln und andererseits wird verhindert, dass Objekte durch die Aussparung hindurch die LIBS-Laservorrichtung beschädigen, da der Laser durch den Steg abgeschirmt wird. Die Materialdicke kann z.B. um 40-70% reduziert sein, z.B. um 50%.

Der Messbereich der Aussparung liegt auch bei dieser Ausführungsform, mit Vertiefung, in Förderrichtung gesehen vom unteren Ende des zweiten Abschnitts der Rutsche entfernt, insbesondere am vom unteren Ende des zweiten Abschnitts der Rutsche am weitesten beabstandeten Bereich der Aussparung. Die Aussparung kann kreisförmig sein, oder die Form eines Langlochs haben, das in Förderrichtung ausgerichtet ist.

Bei herkömmlichen LIBS-Vorrichtungen sind solche Aussparungen nicht schlitzförmig oder mit folgender Vertiefung ausgeführt, sondern beispielsweise kreisförmig, was dazu führt, dass sich am Rand der kreisförmigen Aussparung mit der Zeit Verunreinigungen ansammeln und ablagern, wodurch die LIBS-Lasermessung beeinträchtigt wird.

Auf Grund des Umstandes, dass der erste Abschnitt der Rutsche zentrierend wirkt, hat der erste Abschnitt jedenfalls zumindest ansatzweise Wände. Um zu verhindern, dass die zu sortierenden Objekte vor bzw. nach der LIBS-Messung im zweiten Abschnitt der Rutsche seitlich von der Rutsche fallen und dadurch nicht korrekt getrennt werden können, ist in einer Ausführungsform der Erfindung vorgesehen, dass der zweite Abschnitt der Rutsche längs der Rutsche Seitenwände umfasst, die, in einem Schnitt normal zur Förderrichtung betrachtet, senkrecht verlaufen, um ein Objekt auf dem zweiten Abschnitt zu halten. Insbesondere bei Objekten, die sich im zweiten Abschnitt der Rutsche nicht mittig halten, sondern seitlich von der Rutsche fallen oder auf eine benachbarte Rutsche gleiten würden, ist vorgesehen, dass die Rutsche in zweiten Abschnitt Seitenwände aufweist. Diese Seitenwände sind eben ausgebildet und normal zur ebenen Auflagefläche des zweiten Abschnitts angeordnet. Die Seitenwände dienen der seitlichen Führung und sind keine Auflagefläche oder Förderfläche für die Objekte. Diese Seitenwände können nicht dazu dienen, das Objekt in die Mitte des zweiten Abschnitts zu zentrieren, weil sie keine geneigten Teil-Förderflächen aufweisen.

Um den zweiten Abschnitt der Rutsche besonders kostengünstig und lediglich mit einem Boden herstellen zu können, ist in einer Ausführungsform der Erfindung vorgesehen, dass der zweite Abschnitt der Rutsche keine Seitenwände umfasst. In der Regel gewährleistet nämlich der zentrierende, insbesondere konkave, erste Abschnitt eine geradlinige Bewegung, die von den Objekten im zweiten Abschnitt ohnehin fortgesetzt wird. Der zweite Abschnitt der Rutsche würde dann lediglich eine ebene Auflagefläche umfassen.

Es wäre auch denkbar, dass der zweite Abschnitt abschnittsweise Seitenwände und abschnittsweise keine Seitenwände aufweist.

Um möglichst kosteneffektiv hinsichtlich der Energiekosten zu arbeiten, ist in einer Ausführungsform der Erfindung vorgesehen, dass die LIBS-Laservorrichtung ausgebildet ist, Laserstrahlung nur bei Vorhandensein eines Objekts an der Aussparung, also diskontinuierlich, abzugeben. Durch das Aussenden von gepulster Laserstrahlung nur bei Vorhandensein eines Objekts im Messbereich kann energieeffizienter gearbeitet werden, da jeweils nur für den Messvorgang Laserstrahlung abgegeben werden muss.

Im Fall der diskontinuierlich abgegebenen Laserstrahlung kann eine Objekterkennungseinrichtung vorgesehen sein, welche ausgebildet ist, zumindest die Lage eines Objekts auf der Rutsche zu erfassen, wobei die Objekterkennungseinrichtung in Förderrichtung der Objekte gesehen vor der LIBS-Laservorrichtung angeordnet ist. Die Anordnung der Objekterkennungseinrichtung in Förderrichtung der Objekte gesehen vor der LIBS-Laservorrichtung ist auch bei Verwendung kontinuierlicher Laserstrahlung möglich.

Das zu sortierende Objekt bewegt sich zunächst auf der Rutsche an der Objekterkennungseinrichtung vorbei, welche die Anwesenheit eines Objekts erkennt. Die Steuereinrichtung vermittelt sodann ein Signal an die LIBS-Laservorrichtung, wodurch diese im richtigen Moment einen Laserstrahl auf das Objekt abgibt, um eine laserinduzierte Plasmaspektroskopie des Objekts zur Identifizierung des Objekts durchzuführen.

Um zu verhindern, dass der Laser ständig ein- und ausgeschaltet werden muss, und um damit die Lebensdauer des Lasers zu verlängern, ist in einer bevorzugten Ausführungsform der Erfindung vorgesehen, dass die LIBS-Laservorrichtung ausgebildet ist, kontinuierlich Laserstrahlung abzugeben und dass die Sortiervorrichtung weiter einen Laserdump zum Absorbieren der Laserstrahlung umfasst, wobei der Laserdump in Richtung der Laserstrahlung gesehen bezüglich der Rutsche der LIBS-Laservorrichtung gegenüberliegend angeordnet ist. Dadurch werden Schädigungen an einer Umhausung oder in der Umgebung der Sortiervorrichtung oder an Personen durch den Laser, welcher ständig in dieselbe Richtung strahlt, verhindert.

Vorteilhaft an der kontinuierlichen Laserstrahlung ist, dass die LIBS-Lasermessung von den Daten der Steuereinrichtung, die diese von der Objekterkennungseinrichtung erhält, unabhängig ist, bzw. eine Objekterkennungseinrichtung für diesen Zweck nicht zwingend notwendig wäre. Jedenfalls kann bei kontinuierlicher Laserstrahlung die Position einer vorhandenen Objekterkennungseinrichtung unabhängig von der Position der LIBS-Laservorrichtung (bzw. vom Messbereich) nach optimalen konstruktiven oder trenntechnischen Kriterien gewählt werden.

Dadurch, dass ständig ein gepulster Laserstrahl von der LIBS-Laservorrichtung abgegeben wird, ist es nicht erforderlich, dass die Steuereinrichtung der LIBS-Laservorrichtung ein Signal zur Messung gibt. Im Fall, dass kein Objekt im Messbereich vorhanden ist, wird jedoch lediglich eine Leermessung durchgeführt.

Insbesondere im Fall der kontinuierlichen Laserstrahlung kann eine Objekterkennungseinrichtung vorgesehen sein, welche ausgebildet ist, zumindest die Lage eines Objekts auf der Rutsche zu erfassen, wobei die Objekterkennungseinrichtung in Förderrichtung der Objekte gesehen auch nach der LIBS-Laservorrichtung angeordnet sein kann.

Insbesondere bei kontinuierlicher Laserbestrahlung der Objekte kann die Objekterkennung nach oder gleichzeitig mit der LIBS-Lasermessung erfolgen. Das Objekt bewegt sich zunächst an der LIBS-Laservorrichtung vorbei, wobei zunächst eine laserinduzierte Plasmaspektroskopie des Objekts zur Identifizierung des Objekts durchgeführt wird, und danach oder gleichzeitig die Objekterkennung erfolgt, um der Trenneinrichtung über die Steuereinrichtung Daten bezüglich des Objekts zukommen zulassen, sodass das geeignete Sortiermuster, insbesondere Ausblasmuster, erreicht wird.

Die LIBS-Laservorrichtung ist bei einer kontinuierlichen Betriebsweise - im Unterschied zur diskontinuierlichen - nicht abhängig von den Daten der Objekterkennung. Es versteht sich darüber hinaus von selbst, dass, wenn die Objekterkennungseinrichtung in Förderrichtung der Objekte gesehen vor der LIBS-Laservorrichtung angeordnet ist, sowohl eine diskontinuierliche als auch eine kontinuierliche Verwendung des Lasers möglich ist, während bei Anordnung nach bzw. bei der LIBS-Lasereinrichtung lediglich die kontinuierliche Abgabe von Laserstrahlung möglich ist.

Die Objekterkennung nach der LIBS-Lasermessung hat den Vorteil, dass die LIBS-Laservorrichtung in Förderrichtung der Objekte gesehen weiter oben an der Rutsche angeordnet wird, sodass die Objekte noch einen längeren Weg bis zur Trenneinrichtung zurücklegen müssen, wodurch mehr Zeit für die Informationsübertragung von der LIBS-Laservorrichtung an die Steuereinrichtung und damit gegebenenfalls für die Aktivierung der Trenneinrichtung durch die Steuereinrichtung bleibt. Eine LIBS-Lasermessung, also die Messung, deren Auswertung (diese benötigt die meiste Zeit) und die Übermittlung des Ergebnisses an die Steuereinrichtung, dauert in der Regel länger als die Objekterkennung, also die Messung der Lage und/oder Form des Objekts und die Übermittlung des Ergebnisses an die Steuereinrichtung.

Wenn eine Objekterkennungseinrichtung vorgesehen ist, kann eine bessere Sortierung durch die Trenneinrichtung erreicht werden, da die Trenneinrichtung besser an die spezifischen Parameter der Objekte, etwa die Lage oder Form der Objekte, angepasst werden kann. So kann etwa die Trennvorrichtung hinsichtlich der Stärke und/oder der Richtung der Betätigung gezielt eingestellt werden. Zum Beispiel kann bei Ausblasdüsen die Stärke des Luftstromes und/oder die Dauer der Luftimpulse und/oder der Auftreffpunkt des Luftstromes auf dem Objekt angepasst werden, um eine geeignete Sortierung zu erreichen.

Die Sortiervorrichtung kann derart ausgebildet sein, dass ein Objekt mehrfach spektroskopisch vermessen wird, wobei vorzugsweise zumindest alle 4,5 mm bis 5 mm eine Vermessung des Objekts durchgeführt wird. Mehrfach bedeutet, dass jedes Objekt zumindest zweimal vermessen wird und zumindest eine dieser beiden Messungen erfolgreich sein muss, damit das Objekt definiert und damit sortiert werden kann. Selbstverständlich ist nicht ausgeschlossen, dass die Abstände zwischen den einzelnen Messungen jeweils an die Größe der zu sortierenden Objekte angepasst werden, sodass beispielsweise ein größerer oder kleinerer räumlicher Abstand zwischen den Messungen liegt. Denkbar wären also Messungen z.B. alle 1 bis 2 mm, alle 2 bis 3 mm, alle 3 bis 4 mm, alle 4 bis 5 mm, alle 5 bis 6 mm, alle 6 bis 7 mm, alle 7 bis 8 mm, alle 8 bis 9 mm oder alle 9 bis 10 mm.

Die Sortierung erfolgt dann, wenn die Messung an zumindest einem Messpunkt erfolgreich war. Mehrere Messpunkte werden insbesondere bei der Verwendung von kontinuierlich abgegebenen gepulsten Laserstrahlen vorliegen. Die Messungen können generell typischer Weise mit einer Frequenz von 500-600 Hz vorgenommen werden, Frequenzen von 1000 Hz oder mehr sind denkbar.

Wenn mehrere Messpunkte pro Objekt vorliegen, können auch mehrere unterschiedliche Materialien an unterschiedlichen Stellen auf einem einzigen Objekt identifiziert werden.

Wie bereits erwähnt, erfolgt die Sortierung nur, wenn zumindest ein Messpunkt eines Objekts eine erfolgreiche Messung aufweist. Liegt keine erfolgreiche Messung vor, handelt es sich um eine sogenannte Leermessung und das Objekt wird entsprechend der qualitativen Zielsetzungen der gewünschten Objekte separiert. Liegen mehrere Messungen für ein Objekt vor, welche sowohl zumindest eine Materialzuordnung, also eine gültige Messung, als auch eine Leermessung umfassen, kann aus dem Verhältnis der Anzahl, gegebenenfalls unter weiterer Parametrierung, der gültigen und der Leermessungen eine Zuordnung für das Objekt zu einer Fraktion durchgeführt werden.

In einer Ausführungsform der Erfindung ist vorgesehen, dass die Sortiervorrichtung weiter eine Abstandsmesseinrichtung zur Ermittlung des Abstands der Objekte auf der Rutsche zur LIBS-Laservorrichtung aufweist. Mit der Abstandsmesseinrichtung kann vor der LIBS-Messung der Abstand der zu vermessenden Oberfläche des Objekts von der LIBS-Laservorrichtung ermittelt werden und so können Abweichungen, in Folge unebener Objektoberflächen, berücksichtigt werden, wodurch Messungenauigkeiten verhindert und/oder die einzelnen Messungen abstandsabhängig selektiert werden können.

Die ebene Auflagefläche des zweiten Abschnitts der Rutsche schließt in der Regel an der tiefsten Stelle des Querschnitts des ersten Abschnitts an. In einer Ausführungsform der Erfindung ist vorgesehen, dass der Übergang vom ersten Abschnitt in den zweiten Abschnitt der Rutsche abrupt ist, wodurch das Anfertigen eines Übergangsabschnitts nicht erforderlich ist. Abrupt bedeutet, dass der Querschnitt der Rutsche sich unstetig ändert, etwa teilweise eine Stufe in der Förderfläche vorliegt. Durch den abrupten Übergang wird eine besonders einfache Herstellungsweise der Rutsche gewährleistet, da ein Übergangsabschnitt, welcher einen sukzessiven Übergang von einer konkaven Rutsche in eine ebene Rutsche ermöglicht, nicht erforderlich ist.

Wenn es die zu sortierenden Objekte erfordern, ist in einer Ausführungsform der Erfindung vorgesehen, dass ein Bereich des ersten Abschnitts, der an den zweiten Abschnitt angrenzt, als ein Übergangsabschnitt ausgebildet ist, um einen sukzessiven Übergang des ersten Abschnitts in den zweiten Abschnitt zu ermöglichen. Ein sukzessiver Übergang bedeutet einen stetigen Übergang ohne Stufen in der Förderfläche. Insbesondere wenn der Übergangsabschnitt einen sukzessiven Übergang vom konkaven Abschnitt in den ebenen Abschnitt der Rutsche ermöglicht, ist dieses herstellungstechnisch mit einem erhöhten Aufwand verbunden. Ein sukzessiver Übergang vom ersten Abschnitt der Rutsche in den zweiten Abschnitt der Rutsche ist insbesondere dann erforderlich, wenn die äußere Ausgestaltung der zu vermessenden Objekte dies erforderlich macht, etwa weil die Objekte bei einem abrupten Übergang von ihrer Bahn stark abgelenkt würden und sich nicht wie vorgesehen über die Aussparung für die LIBS-Messung bewegen würden.

Um einen Objektstau auf der Rutsche zu verhindern, ist in einer Ausführungsform der Erfindung vorgesehen, dass die Breite der Rutsche im ersten Abschnitt in Förderrichtung der Objekte gesehen zunimmt. Vorzugsweise wird die Erweiterung des ersten Abschnitts durch Abkanten eines ebenen Blechs mit schräg zueinander angeordneten Kanten erreicht.

Der Neigungswinkel der Rutsche gegenüber der Horizontalen im Betriebszustand der Sortiervorrichtung sollte nicht zu groß sein, da die einzelnen Objekte dann von der Rutsche, insbesondere vom Rutschenboden, abheben und fallen statt zu rutschen. Die Neigung der Rutsche wird an die zu sortierenden Objekte angepasst, um ein möglichst ideales Sortierergebnis zu erzielen. Beispielsweise eignet sich für Alu-Schrott mit Teilen von einer Größe zwischen 40 mm - 100 mm eine Neigung von etwa 50°. Das Sortierergebnis wird auch von einer zu geringen Neigung negativ beeinflusst, da die Objekte dann zu langsam rutschen, was in einem Materialstau resultieren kann. Insbesondere bei flachen Teilen ist ein Neigungswinkel von etwa 70° geeignet, wodurch der Durchsatz gesteigert werden kann, während bei kugelförmigeren Teilen ein geringerer Neigungswinkel gewählt werden wird.

Um eine besonders gute Sortierung der Objekte zu erreichen, ist daher in einer Ausführungsform der Erfindung vorgesehen, dass die Rutsche einen Neigungswinkel von 40° bis 70°, vorzugsweise von 50°, aufweist. Durch den Neigungswinkel zwischen 40° und 70°, vorzugsweise 50°, wird erreicht, dass die Objekte weder zu langsam rutschen und so einen Objektstau verursachen, noch dass sie zu schnell rutschen und damit vom Boden der Rutsche abheben.

In einer Ausführungsform der Erfindung ist vorgesehen, dass die Sortiervorrichtung weiters eine Vorrichtung zur Vereinzelung der Objekte umfasst, wobei die Vorrichtung zur Vereinzelung der Objekte eine geringere Neigung aufweist als die Rutsche, um vor der Sortierung einen einzelnen Objektstrom erzeugen zu können. Als Vorrichtung zur Vereinzelung der Objekte kommen insbesondere Rüttelrinnen oder sonstige vibrierende Vorrichtungen in Betracht, die durch eine entsprechende Amplitude die Vereinzelung der Objekte erreichen. Um zu verhindern, dass die Objekte die Vorrichtung zur Vereinzelung zu rasch passieren, ist vorgesehen, dass die Rüttelrinne eine geringere Neigung aufweist als die Rutsche.

Es ist nicht erforderlich, dass der erste Abschnitt und der zweite Abschnitt der Rutsche im Betriebszustand in einer senkrechten Ebene, die in Förderrichtung verläuft, jeweils geradlinig verlaufen. Der erste Abschnitt der Rutsche kann auch in dieser senkrechten Ebene betrachtet gebogen sein, also eine variable Neigung haben. Die Rutsche ist aber in der Regel nicht aus der senkrechten Ebene herausgekrümmt, macht also in anderen Worten keine seitlichen Kurven in Förderrichtung der Objekte.

Da die zu sortierenden Objekte zumeist vor der Sortierung nicht gereinigt werden, ist in einer Ausführungsform der Erfindung vorgesehen, dass eine zweite Laservorrichtung zum Reinigen der Objekte vorgesehen ist, wobei die zweite Laservorrichtung in Förderrichtung der Objekte gesehen vor der LIBS-Laservorrichtung angeordnet ist, um die Oberfläche der Objekte vor der Vermessung zumindest in einem Bereich reinigen zu können, der zumindest so groß wie der Auftreffbereich des LIBS-Laserstrahls am Objekt ist. In der Regel wird der gereinigte Bereich größer als der Auftreffbereich des LIBS-Laserstrahls sein. Vorzugsweise wird jeder Auftreffbereich des LIBS-Laserstrahls durch die zweite Laservorrichtung gereinigt.

Durch das vorherige Reinigen der Auftreffbereiche mit dem zweiten Laser wird verhindert, dass die Verunreinigung oder Beschichtungen vermessen werden, anstelle des Objektmaterials selbst. Die Vermessung der Verunreinigung oder der Beschichtung würde schlimmstenfalls dazu führen, dass das Objekt nicht entsprechend getrennt wird, wodurch einerseits die bereits getrennte Fraktion umfassend das bestimmte Material verunreinigt werden würde, und andererseits ein Objekt umfassend das gesuchte Material gar nicht identifiziert werden kann.

Um zu verhindern, dass die zu sortierenden Objekte in der Rutsche stecken bleiben, und damit die Sortierung der übrigen Objekte aufhalten, was zu hohen Kosten auf Grund der Unterbrechung des Sortiervorganges führen kann, ist in einer Ausführungsform der Erfindung vorgesehen, dass die Rutsche eine Breite aufweist, die zumindest 2-mal so groß ist wie das größte zu sortierende Objekt. Die Breite der Rutsche sollte damit möglichst an die Größe der Objekte angepasst sein, sodass keines der Objekte den Messvorgang aufhält. Der erste Abschnitt der Rutsche kann sich in Richtung des zweiten Abschnitts erweitern, nicht jedoch verengen, um eine negative Beeinflussung des Rutschvorganges der Objekte zu verhindern.

Um die Sortierung mehrerer Objekte parallel zu ermöglichen, ist in einer Ausführungsform der Erfindung vorgesehen, dass zumindest zwei Rutschen parallel nebeneinander angeordnet sind. In der Regel werden diese Rutschen gleich ausgebildet sein, sie könnten aber auch unterschiedlich ausgebildet sein, z.B. mit unterschiedlicher Breite.

Durch die parallele Anordnung wird insbesondere ermöglicht, den Sortierdurchsatz der Vorrichtung zu erhöhen. Prinzipiell wäre es allerdings auch möglich, mehrere unterschiedliche Objekte, wie zum Beispiel Metalle oder Erze oder/und auch Objekte mit verschiedenen Größen auf den einzelnen Rutschen auszusortieren. Es können natürlich auch mehr als 2 Rutschen nebeneinander angeordnet werden, z.B. 3 oder 4 oder 5.

Jedenfalls erforderlich ist, dass jede Rutsche über eine eigene Aussparung sowie eine eigene LIBS-Laservorrichtung zur LIBS-Messung verfügt, da sonst die Objekte nicht vermessen und analysiert werden können. Des Weiteren sollte jede Rutsche eine eigene Trenneinrichtung aufweisen, um die Objekte nach erfolgter Trennung in die Fraktionen aufteilen zu können. Nicht erforderlich ist, dass jede Rutsche über eine eigene Steuereinrichtung verfügt. Es wäre also denkbar, dass nur eine gemeinsame Objekterkennungseinrichtung und/oder eine gemeinsame Steuereinrichtung für alle Rutschen vorgesehen ist.

Insbesondere wenn mehrere parallel verlaufende Rutschen vorgesehen sind, ist in Förderrichtung der Objekte gesehen vor den Rutschen zunächst eine Vorrichtung zur Erzeugung eines einschichtigen Objektstroms und eine Einrichtung zur Vereinzelung der Objekte, vorzugsweise eine Rüttelrinne, angeordnet. Dieser einschichtige Objektstrom wird in der Folge durch z.B. mehrere rinnenförmige Einbauten in mehrere parallel verlaufende Objektströme in Förderrichtung der Objekte gesehen hintereinander einzeln angeordneter Objekte geteilt. Das bedeutet, es kommt nach einer Flächenverteilung der Objekte zu einer Linienverteilung der Objekte.

Die Aufgabe der Erfindung wird auch gelöst durch ein erfindungsgemäßes Verfahren zum Sortieren von Objekten mit einer erfindungsgemäßen Vorrichtung, wobei das Verfahren die folgenden Schritte umfasst:
a. Vereinzeln der Objekte, um die Objekte nacheinander mittels Schwerkraft auf zumindest einer Rutsche zu bewegen;
b. spektroskopische Vermessung der Objekte mittels einer LIBS-Laservorrichtung, wobei ein Objekt mehrfach, vorzugsweise zumindest alle 4,5 mm bis 5 mm, spektroskopisch vermessen wird;
c. Aussortieren bestimmter Objekte mittels einer Trenneinrichtung.

Als mehrfach vermessen wird die zumindest zweimalige spektroskopische Vermessung eines Objekts angesehen. Es versteht sich von selbst, dass die vorgenommene Anzahl von Messungen von der Größe bzw. der Länge eines Objekts abhängt. Es werden daher längere bzw. größere Objekte in der Regel öfter vermessen als kleinere.

Eine etwaige Objekterkennung kann vor, gleichzeitig oder nach der spektroskopischen Vermessung erfolgen.

### KURZE BESCHREIBUNG DER FIGUREN

Die Erfindung wird nun anhand von Ausführungsbeispielen näher erläutert. Die Zeichnungen sind beispielhaft und sollen den Erfindungsgedanken zwar darlegen, ihn aber keinesfalls einengen oder gar abschließend wiedergeben.

Dabei zeigt:
- Fig. 1: einen schematischen Aufbau einer Ausführungsform einer erfindungsgemäßen Sortiervorrichtung, bei welcher die Objekterkennungseinrichtung vor der LIBS-Laservorrichtung angeordnet ist;
- Fig. 2: einen schematischen Aufbau einer Ausführungsform erfindungsgemäßen Sortiervorrichtung, bei welcher die Objekterkennungseinrichtung nach der LIBS-Laservorrichtung angeordnet ist;
- Fig. 3: eine Ausführungsform einer erfindungsgemäßen Sortiervorrichtung mit drei Rutschen in perspektivischer Ansicht,
- Fig. 4: einen Ausschnitt einer Draufsicht auf die Rutschen der Ausführungsform der erfindungsgemäßen Sortiervorrichtung aus Fig. 3,
- Fig. 5: eine Seitenansicht der Ausführungsform der erfindungsgemäßen Sortiervorrichtung von Fig. 3,
- Fig. 6: drei Schnitte durch die ersten und die zweiten Abschnitte von drei parallel verlaufenden Rutschen aus der Ausführungsform der Fig. 3,
- Fig. 7: vergrößerte Ausschnitte der Ausführungsform der erfindungsgemäßen Sortiervorrichtung aus Fig. 6,
- Fig. 8: eine Ausführungsform einer erfindungsgemäßen Sortiervorrichtung mit drei Rutschen umfassend Seitenwände, in perspektivischer Ansicht,
- Fig. 9: einen Ausschnitt einer Draufsicht auf die Rutschen der Ausführungsform der erfindungsgemäßen Sortiervorrichtung aus Fig. 8,
- Fig. 10: eine Seitenansicht der Ausführungsform der erfindungsgemäßen Sortiervorrichtung von Fig. 8.

### WEGE ZUR AUSFÜHRUNG DER ERFINDUNG

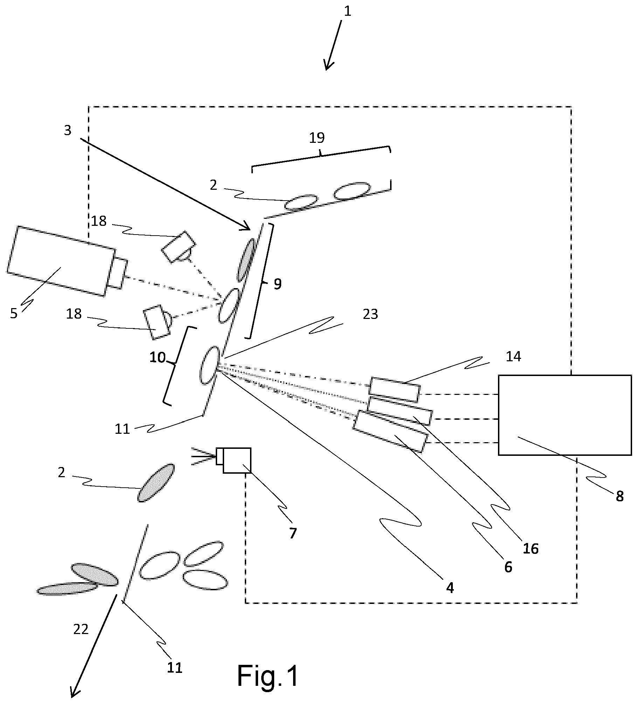

Fig. 1 zeigt den schematischen Aufbau einer Ausführungsform einer erfindungsgemäßen Sortiervorrichtung 1. Die Ausführungsform umfasst eine Rutsche 3, auf der Objekte 2 durch die Gravitationskraft bewegbar sind, eine Objekterkennungseinrichtung 5, eine optionale Abstandsmesseinrichtung 14, eine LIBS-Laservorrichtung 6, eine zweite Laservorrichtung 16, eine Steuereinrichtung 8 sowie eine Trenneinrichtung 7. Die Vorrichtung weist weiter eine Einrichtung 19 zur Vereinzelung der Objekte 2 auf, hier eine Rüttelrinne, welche aus einem Objektstrom eine linienförmige Anordnung aus einzelnen Objekten 2 erzeugt, sodass die LIBS-Messung der Objekte 2 nacheinander erfolgen kann.

Die Rutsche 3 ist in einen ersten Abschnitt 9 und einen zweiten Abschnitt 10 unterteilt, wobei die Objekte zunächst durch den ersten Abschnitt 9 bewegbar sind und erst anschließend in den zweiten Abschnitt 10 der Rutsche gelangen. Der zweite Abschnitt 10 der Rutsche 3 weist eine Aussparung 4 auf, unter welcher in einem Abstand die LIBS-Laservorrichtung 6 zur Durchführung einer LIBS-Messung durch die Aussparung 4 hindurch angeordnet ist. Die LIBS-Laservorrichtung 6 umfasst zumindest ein Element zur Erzeugung eines Laserstrahls sowie einen Detektor.

Die Objekte 2 werden beispielsweise mit Hilfe der Einrichtung zur Vereinzelung 19 vereinzelt und gelangen dann nacheinander auf den ersten Abschnitt 9 der Rutsche 3. Das Objekt 2 wird zuerst von der Beleuchtung 18 angestrahlt und dadurch von der Objekterkennungseinrichtung 5 erkannt bzw. die Lage des Objekts 2 festgestellt und an die Steuereinrichtung 8 übermittelt. Durch diese Daten kann die Steuereinrichtung 8 auch berechnen, wann das Objekt bei der LIBS-Laservorrichtung 6 und bei der Trenneinrichtung 7 sein wird. Prinzipiell wäre es auch möglich, dass die Objekterkennungseinrichtung 5 noch weitere Daten des Objekts 2 erfasst und der Steuereinrichtung zusätzlich Daten über die Form, Größe oder Höhe des Objekts liefert. Dies bedeutet, die Objekterkennungseinrichtung 5 kann entweder eine zweidimensionale Abbildung erstellen, wenn lediglich die Lage bzw. die Form des Objekts 2 von Interesse ist, oder eine dreidimensionale Abbildung erstellen, wenn auch beispielsweise die Höhe des Objekts 2 von Relevanz ist. Durch die Daten der Objekterkennungseinrichtung 5 kann auch ermittelt werden, wie lange das Objekt 2 den Messbereich 23 abdeckt, also wie viele LIBS-Messungen von diesem Objekt gemacht werden sollten, und wo die Trenneinrichtung 7 am Objekt 2 angreifen soll, also etwa, welche Ausblasdüsen eines Ausblasdüsenarrays angesteuert werden. So könnten z.B. mehrere Ausblasdüsen quer zur Förderrichtung angesteuert werden, wenn das Objekt 2 quer liegt.

Wenn keine kontinuierliche Laserstrahlung abgegeben wird, kann einerseits vorgesehen sein, dass die Steuereinrichtung 8 dann ein Signal an die LIBS-Laservorrichtung 6 gibt, eine LIBS-Messung durchzuführen, sobald das Objekt 2 die Aussparung 4, hinter bzw. unter der sich die LIBS-Laservorrichtung 6 befindet, passiert, oder es wird ständig gepulste Laserstrahlung abgegeben, sodass die Messung unabhängig von einem Signal der Objekterkennungseinrichtung 5 erfolgt.

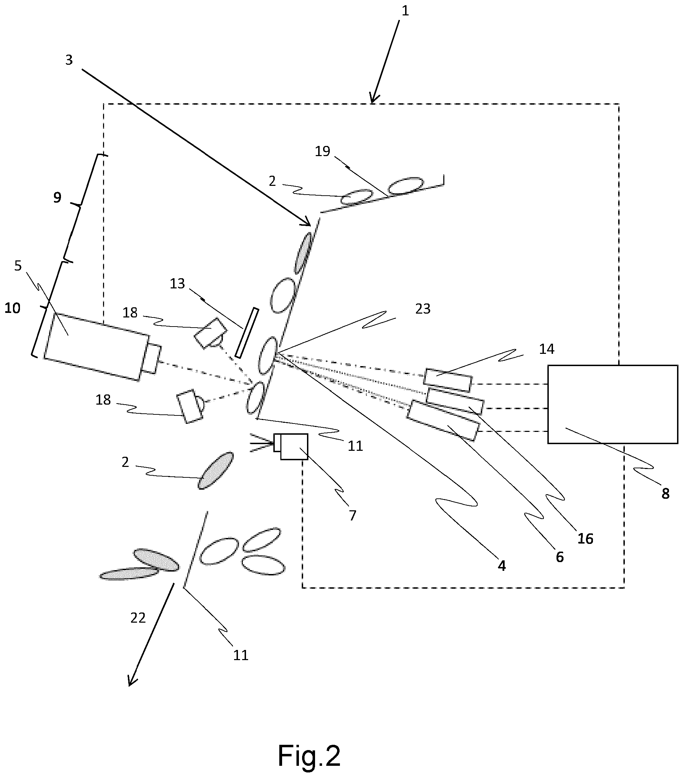

In der Fig. 2 dargestellt ist eine Ausführungsform einer Vorrichtung mit kontinuierlicher Laserbestrahlung, sodass der Laser der LIBS-Laservorrichtung 6 generell ständig arbeitet, auch wenn kein Objekt 2 über der Aussparung 4 vorhanden ist. Wenn kein Objekt 2 zum Vermessen da ist, wird eine sogenannte Leermessung durchgeführt, bei der keine Daten an die Steuereinrichtung 8 übermittelt werden. Ist wiederum ein Objekt 2 über der Aussparung 4 vorhanden, so werden nach erfolgreicher Messung Messdaten an die Steuereinrichtung 8 übermittelt und der Sortiervorgang eingeleitet. Da ständig Laserstrahlung abgegeben wird, ist darüber hinaus ein Laserdump 13 vorgesehen, der beabstandet von der Aussparung 4 bezüglich der Rutsche 3 der LIBS-Laservorrichtung 6 gegenüberliegend angeordnet ist, um die von der LIBS-Laservorrichtung 6 abgegebene Strahlung zu absorbieren. Die Steuereinrichtung 8 erhält auch noch Messergebnisse der in Förderrichtung der Objekte 2 gesehen vor der LIBS-Laservorrichtung 6 angeordneten optionalen Abstandsmesseinrichtung 14, welche den Abstand des Objekts 2 von der LIBS-Laservorrichtung 6 misst und damit erkennt, welchen Abstandsverlauf das Objekt 2 zur Rutsche 3 bzw. zur LIBS-Laservorrichtung 6 aufweist, wodurch Fehler bei der Bewertung der LIBS-Lasermessungen vermieden werden können.

Darüber hinaus könnte vor der LIBS-Laservorrichtung 6 noch eine zweite Laservorrichtung 16 vorgesehen sein, um das Objekt 2 vor der LIBS-Messung durch die LIBS-Laservorrichtung 6 zumindest an den Messbereichen auf dem Objekt 2 von eventuellen Verunreinigungen zu befreien. Die LIBS-Laservorrichtung 6 führt eine LIBS-Messung durch, wobei das Ergebnis, d.h. die ermittelten Messdaten, an die Steuereinrichtung 8 gesendet wird, die nun ihrerseits die Messdaten bewertet und ein Signal an die Trenneinrichtung 7 sendet, sodass das Objekt 2, wenn es ein vorher festgelegtes Metall oder Erz aufweist, aussortiert wird. Anhand der Messdaten kann die Trenneinrichtung 7 beispielsweise hinsichtlich Form, Lage oder Größe des jeweiligen Objekts 2 angepasst gesteuert bzw. geregelt werden. Die Objekte 2 werden in der Folge in zumindest zwei Fraktionen unterteilt, nämlich in eine Fraktion, die Objekte 2 mit dem vorher festgelegten Element bzw. der Zusammensetzung enthält, und eine Fraktion mit Objekten 2, die dieses/diese nicht enthalten. Allgemein könnte natürlich auch noch eine Fraktion vorgesehen sein, in die die Objekte 2, welche auf Grund einer Leermessung nicht definiert werden können, sortiert werden können. Es könnten z.B. eine weitere Trenneinrichtung 7 oder weitere Ausblasdüsen in die bestehende Trenneinrichtung 7 eingebaut werden, um eine dritte Fraktion nicht definierbarer Objekte 2 abzutrennen.

Im vorliegenden Fall ist die Objekterkennungseinrichtung 5 eine VIS-Kamera und die Trenneinrichtung 7 eine Ausblasdüse oder ein Ausblasdüsenarray. Pro Rutsche 3 ist jeweils eine Trenneinrichtung 7 vorgesehen, welche entweder ein oder mehrere Ausblasdüsenventile umfasst.

Die Ausführungsform gemäß der Fig. 2 unterscheidet sich von der Ausführungsform gemäß der Fig. 1 im Wesentlichen lediglich dadurch, dass die Objekterkennungseinrichtung 5 in Förderrichtung 22 der Objekte 2 gesehen nach der LIBS-Laservorrichtung 6 angeordnet ist.

Durch die Anordnung der Objekterkennung nach der LIBS-Laservorrichtung 6 bleibt für die LIBS-Lasermessung und die Übermittlung der Messdaten an die Steuereinrichtung 8 mehr Zeit, da die LIBS-Laservorrichtung 6 in Förderrichtung 22 der Objekte 2 gesehen weiter vom unteren Ende 11 der Rutsche entfernt positioniert sein kann. Die Objekterkennung dauert wiederum wesentlich kürzer als die LIBS-Lasermessung, sodass die Objekterkennungseinrichtung 5 auch problemlos nach der LIBS-Laservorrichtung 6 angeordnet werden kann. Vorteilhaft an dieser Anordnung ist darüber hinaus, dass die LIBS-Lasermessung unabhängig von den Daten der Objekterkennung arbeitet, d.h. nicht von der Steuereinrichtung übermittelten Daten abhängig ist.

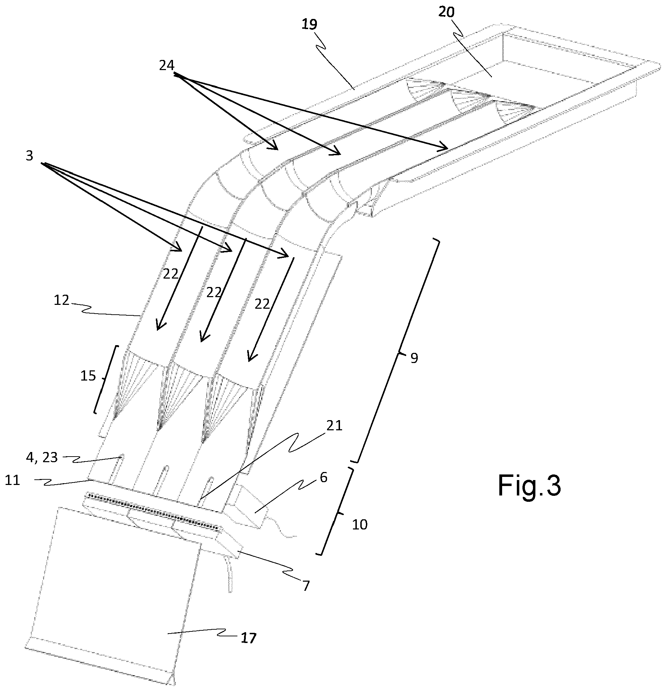

Fig. 3 zeigt eine Ausführungsform umfassend drei gleichartige Rutschen 3, jeweils umfassend einen ersten Abschnitt 9 und einen zweiten Abschnitt 10. In Förderrichtung 22 der Objekte 2 gesehen ist vor den Rutschen 3 eine Einrichtung zur Vereinzelung der Objekte 2, in Form einer Rüttelrinne 19 mit je einem rinnenförmigen Führungselement 24 pro Rutsche 3 angeordnet, welches Führungselement 24 jeweils in den ersten Abschnitt 9 einer Rutsche 3 mündet, vorzugsweise an den Querschnitt der Rutsche angepasst. Die Rüttelrinne 19, und damit deren Führungselemente 24, hat bzw. haben eine geringere Neigung als die Rutsche 3. In Förderrichtung 22 der Objekte 2 vor der Rüttelrinne 19 ist eine gemeinsame Wanne angeordnet, die als Vorrichtung zum Erzeugen eines einschichtigen Objektstroms 20 dient. Durch drei Rutschen 3 können gleichzeitig Objekte 2 abgetrennt werden.

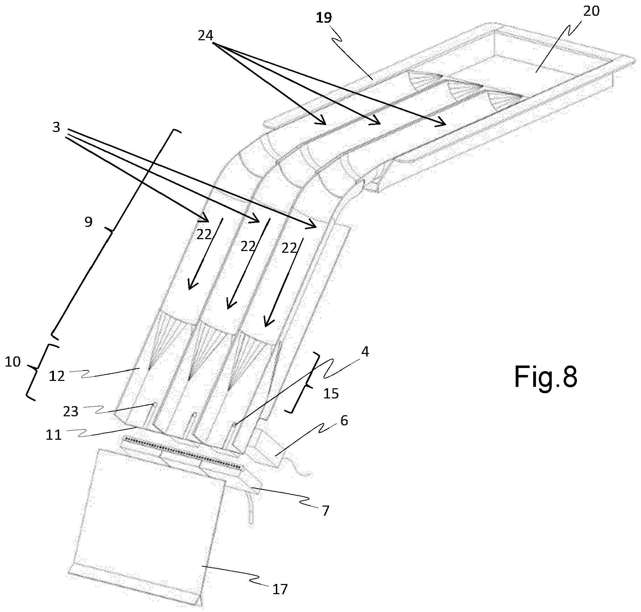

Die Rutsche 3 gemäß der Ausführungsform der Fig. 3 umfasst einen Übergangsabschnitt 15, welcher einen sukzessiven Übergang des ersten Abschnitts 9 in den zweiten Abschnitt 10 ermöglicht, also den Querschnitt des ersten Abschnitts 9, hier halbkreisförmig, kontinuierlich in den Querschnitt des zweiten Abschnitts 10, hier eine ebene Auflagefläche ohne Seitenwände 12 (siehe Fig. 8), überführt.

Weiters weist der zweite Abschnitt 10 der Rutsche eine Aussparung 4 in Form eines kreisförmigen Lochs auf, an das sich bis zum unteren Rand 11 des zweiten Abschnitts 10 der Rutsche 3 eine Vertiefung in Form eines Stegs 21 anschließt. Die Vertiefung in Form eines Stegs 21 verhindert, dass sich Verunreinigungen in der Aussparung 4 ansammeln und dadurch die von der LIBS-Laservorrichtung 6 durchgeführte Messung negativ beeinflussen. Durch Steg 21 wird jedoch gleichzeitig verhindert, dass die LIBS-Laservorrichtung durch Objekte 2, welche durch die Aussparung 4 hindurch gelangen, beschädigt wird. In den Ausführungsformen der Fig. 1 und 2 ist ersichtlich, dass die LIBS-Laservorrichtung 6 beabstandet von der Aussparung 4 zur Durchführung der Messung von unterhalb der Rutsche 3 durch die Aussparung 4 hindurch angeordnet ist.

Die Ausführungsform der Fig. 3 zeigt weiter eine Trenneinrichtung 7, welche dazu dient, die Objekte 2 in zumindest zwei Fraktionen zu unterteilen, indem entweder die Objekte 2, die identifiziert wurden, das gewünschte Element bzw. die gewünschte Zusammensetzung oder den gewünschten Gehalt zu enthalten, abgetrennt werden, oder die übrigen Objekte 2. In der Ausführungsform der Fig. 3 wird die Trenneinrichtung 7 durch Ausblasdüsen bzw. ein Ausblasdüsenarray verwirklicht, welche die Objekte 2 über eine Trennwand 17 hinweg blasen können.

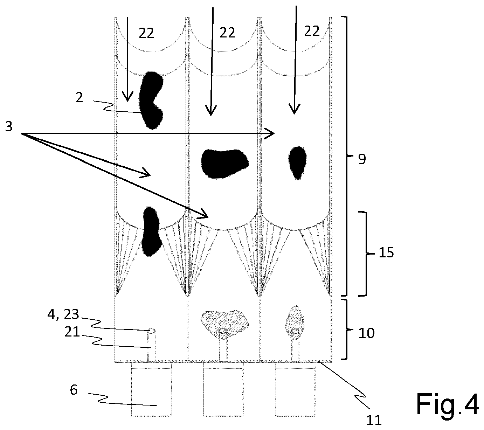

Fig. 4 zeigt die Draufsicht auf eine erfindungsgemäße Ausführungsform umfassend drei Rutschen 3 gemäß der Ausführungsform der Fig. 3, die drei Rutschen 3 jeweils umfassend einen ersten Abschnitt 9, einen zweiten Abschnitt 10 sowie einen Übergangsabschnitt 15, auf welchen Rutschen 3 Objekte 2 angeordnet sind. Der erste Abschnitt 9 der Rutsche 3 ist konkav, hier halbkreisförmig, während der zweite Abschnitt 10 eben ist. Der Übergangsabschnitt 15 ermöglicht einen sukzessiven Übergang vom konkaven ersten Abschnitt 9 in den ebenen zweiten Abschnitt 10. Der erste Abschnitt umfasst durch seine konkave Ausformung seitliche Wände, während der zweite Abschnitt 10 keine seitlichen Wände aufweist, sondern lediglich als ebene Platte ausgeführt ist.

Der zweite Abschnitt der Rutsche 3 weist jeweils eine Aussparung 4 mit einem Messbereich 23 auf, unter der beabstandet die LIBS-Laservorrichtung 6 angeordnet ist, um durch die Aussparung 4 hindurch die Messung durchzuführen. Dabei findet die Messung im Messbereich 23 am Beginn der Aussparung 4 statt. Zwei im Messbereich befindliche Objekte 2 sind hier durchscheinend dargestellt, um die Aussparung 4 noch zu erkennen. Die Breite der Aussparung 4, hier gemessen von links nach rechts, ist gleich der Breite des Stegs 21, und beträgt 10-15% der Breite eines zweiten Abschnitts 10.

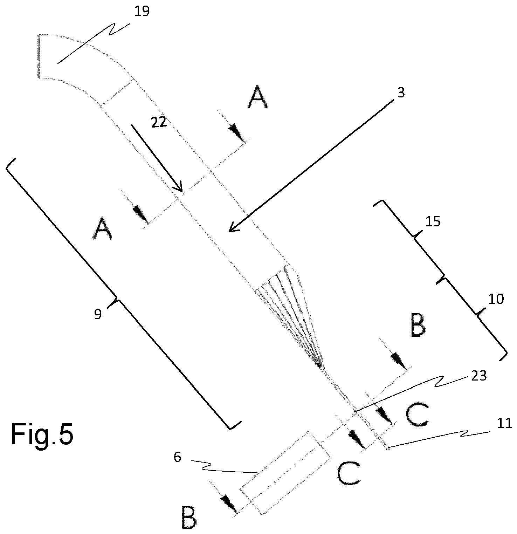

Fig. 5 zeigt eine Seitenansicht der Ausführungsformen der Fig. 3 bzw. 4. In Fig. 5 ist weiters eine LIBS-Laservorrichtung 6 zur Durchführung der LIBS-Lasermessung durch den Messbereich 23 der Aussparung 4 hindurch ersichtlich. Die Rutsche 3 weist Wände im Bereich des ersten Abschnitts 9, nicht aber im Bereich des zweiten Abschnitts 10 auf. Der zweite Abschnitt 10 ist lediglich als ebene Platte ausgeführt.

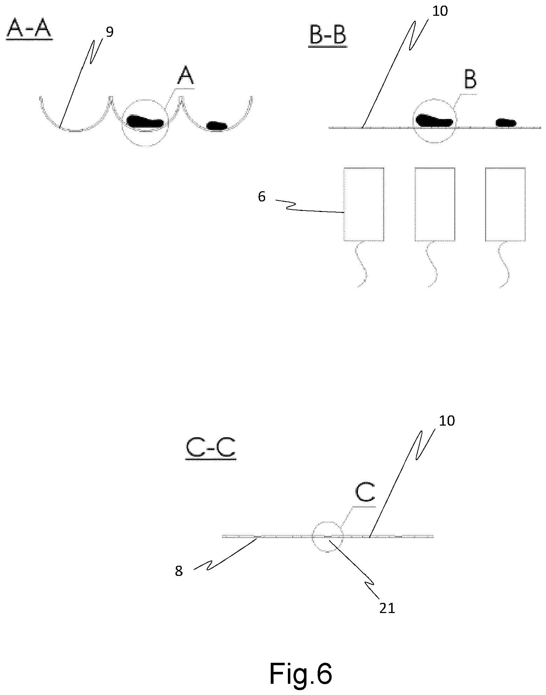

Fig. 6 zeigt die Anordnung von Objekten 2, welche eine im Wesentlichen ebene Auflagefläche aufweisen, im ersten, konkaven Abschnitt 9 der Rutsche 3 (Schnitt A-A in Fig. 5) sowie im ebenen zweiten Abschnitt 10 (Schnitt B-B in Fig. 5). Des Weiteren zeigt Fig. 6 eine Abbildung der Schnittansicht im zweiten Abschnitt 10 der Rutsche ohne Objekt 2. Dadurch ist die Aussparung 4 der Rutsche 3 erkennbar (durch Detail C in der Abbildung C-C hervorgehoben).

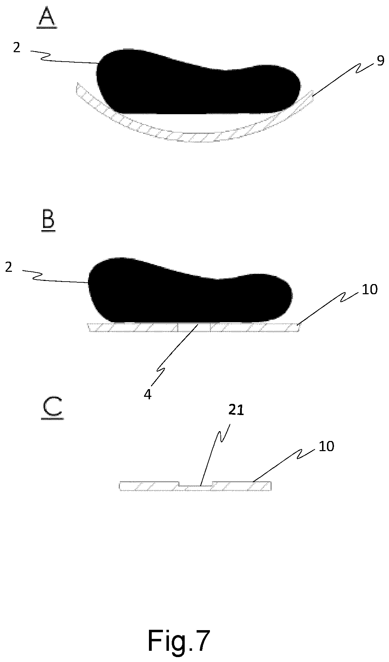

In Fig. 7 sind die Details A, B und C aus Fig. 6 vergrößert dargestellt. Die Rutsche 3 weist im Abschnitt 9 (Schnittebene A-A) aufgrund des konkaven Querschnitts Wände auf, während im zweiten Abschnitt 10 (Schnittebene B-B bzw. C-C) keine Seitenwände 12 vorhanden sind. Der zweite Abschnitt 10 ist als ebene Platte ausgeführt.

In der Darstellung A ist ersichtlich, dass das große Objekt 2 mit seiner Auflagefläche vom tiefsten Punkt der Rutsche 3 um einen Abstand distanziert vorliegt, welcher von der Größe des Objekts 2 sowie der Konkavität der Rutsche 3 abhängt. Das Objekt ist damit erhöht in der Rutsche 3 angeordnet. Auf Grund des dadurch variierenden Abstands des Objekts 2 von einer LIBS-Laservorrichtung 6 könnte es in diesem Abschnitt zu Messschwankungen und damit einhergehend zu Messfehlern kommen.

Im zweiten Abschnitt 10 (Darstellung B) wiederum liegt die Auflagefläche des Objekts 2 vollständig auf dem tiefsten Punkt der Rutsche 3 auf, den es im engeren Sinne nicht gibt, da alle Punkte des zweiten Abschnitts 10 der Rutsche 3 in einer Ebene liegen, wodurch die Objekte 2 stets denselben Abstand zur LIBS-Laservorrichtung 6 aufweisen. Messschwankungen auf Grund von unterschiedlichen Abständen zur LIBS-Laservorrichtung 6 werden dadurch verringert.

In Darstellung C ist wiederum die Schnittebene der Rutsche 3 in Abschnitt 10 ersichtlich, wobei die Ausführung des Stegs 21 am unteren Ende 11 der Rutsche 3 erkennbar ist. Die Aussparung 4 wird in Förderrichtung 22 der Objekte 2 gesehen am Ende durch einen Steg 21 abgeschlossen. Der Steg 21 ist weniger dick als der umgebende zweite Abschnitt 10, sodass sich an der Oberseite des Stegs 21 in teilweiser Fortsetzung der Aussparung 4 eine Vertiefung im zweiten Abschnitt 10 ausbildet. Abrieb von untersuchten Objekten 2 kann längs der Vertiefung, die der Steg 21 bildet, abrutschen.

Fig. 8 zeigt eine Sortiervorrichtung 1, welche weitgehend jener der Ausführungsform der Fig. 3 entspricht. Die beiden Vorrichtungen unterscheiden sich lediglich darin, dass die Sortiervorrichtung 1 in der Ausführungsform der Fig. 8 im zweiten Abschnitt 10 senkrechte Wände 12 aufweist, während dies bei der Ausführungsform der Fig. 3 nicht der Fall ist.

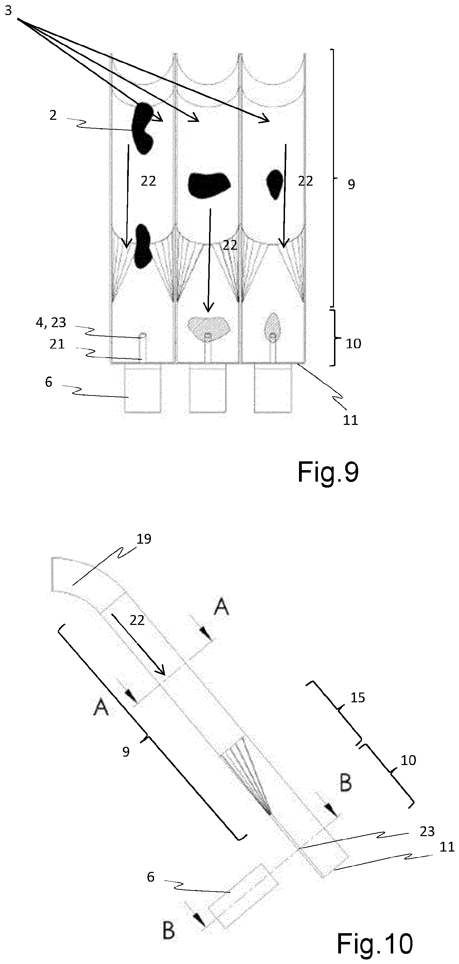

Fig. 9 zeigt die Draufsicht auf drei Rutschen 3 entsprechend der Draufsicht in Fig. 4. Die Rutschen 3 der beiden Vorrichtungen unterscheiden sich lediglich darin, dass die Rutschen 3 gemäß der Ausführungsform der Fig. 9 im zweiten Abschnitt 10 Seitenwände 12 aufweisen, während dies bei Fig. 4 nicht der Fall ist.

Fig. 10 zeigt eine Seitenansicht entsprechend der Darstellung in Fig. 5. Die Rutsche 3 unterscheidet sich von der Rutsche aus Fig. 5 lediglich darin, dass die Rutsche 3 gemäß der Ausführungsform der Fig. 10 im zweiten Abschnitt 10 Seitenwände 12 aufweist, während dies bei der Ausführungsform gemäß der Fig. 5 nicht der Fall ist.

### BEZUGSZEICHENLISTE

- 1: Sortiervorrichtung
- 2: Objekt
- 3: Rutsche
- 4: Aussparung
- 5: Objekterkennungseinrichtung
- 6: LIBS-Laservorrichtung
- 7: Trenneinrichtung
- 8: Steuereinrichtung
- 9: Erster Abschnitt
- 10: Zweiter Abschnitt
- 11: Unteres Ende
- 12: Seitenwand
- 13: Laserdump
- 14: Abstandsmesseinrichtung
- 15: Übergangsabschnitt
- 16: Zweite Laservorrichtung
- 17: Trennwand
- 18: Beleuchtung
- 19: Einrichtung zur Vereinzelung der Objekte (Rüttelrinne)
- 20: Vorrichtung zum Erzeugen eines einschichtigen Objektstroms
- 21: Steg
- 22: Förderrichtung
- 23: Messbereich
- 24: rinnenförmige Führungselemente der Einrichtung 19

## Patentansprüche

1. Sortiervorrichtung (1) zum Sortieren von Objekten (2), die Sortiervorrichtung (1) umfassend zumindest
- eine Rutsche (3), auf welcher die Objekte (2) nacheinander durch die einwirkende Gravitationskraft in einer Förderrichtung (22) bewegbar sind, wobei die Rutsche (3) eine Aussparung (4) umfassend einen Messbereich (23) aufweist,
- eine LIBS-Laservorrichtung (6), wobei die LIBS-Laservorrichtung (6) benachbart zur Aussparung (4) der Rutsche (3) angeordnet ist, um eine spektroskopische Vermessung der sich entlang der Rutsche (3) bewegenden Objekte (2) durch die Aussparung (4) hindurch durchzuführen,
- eine Trenneinrichtung (7) zum Aussortieren bestimmter Objekte (2), sowie
- eine Steuereinrichtung (8) zur Steuerung und/oder Regelung der Trenneinrichtung (7) in Abhängigkeit von den Messergebnissen der LIBS-Laservorrichtung (6), **dadurch gekennzeichnet, dass** die Rutsche (3) zumindest zwei Abschnitte umfasst, wobei der erste Abschnitt (9), durch den die Objekte (2) zuerst bewegbar sind, derart ausgebildet ist, dass die sich entlang des ersten Abschnitts (9) bewegenden Objekte (2) mittels Gravitationskraft normal zur Förderrichtung (22) zentriert werden, und der zweite Abschnitt (10) der Rutsche (3) eben ausgebildet ist, und dass die Aussparung (4) umfassend den Messbereich (23) im zweiten Abschnitt (10) der Rutsche (3) angeordnet ist.

2. Sortiervorrichtung (1) nach Anspruch 1, **dadurch gekennzeichnet, dass** der erste Abschnitt (9) konkav ausgebildet ist, indem eine Förderfläche des ersten Abschnitts (9), betrachtet in einem Schnitt normal zur Förderrichtung (22), zumindest abschnittweise geneigt angeordnet ist, und dass der zweite Abschnitt (10) keine Förderfläche aufweist, die in einem Schnitt normal zur Förderrichtung (22) betrachtet geneigt angeordnet ist.

3. Sortiervorrichtung (1) nach einem der Ansprüche 1 oder 2, **dadurch gekennzeichnet, dass** die Rutsche (3) eine Breite aufweist und der zweite Abschnitt (10) der Rutsche (3) ein unteres Ende (11) aufweist und dass der Messbereich (23) der Aussparung (4) zumindest eine halbe Breite der Rutsche (3) über dem unteren Ende (11) des zweiten Abschnitts (10) der Rutsche (3) angeordnet ist.

4. Sortiervorrichtung (1) nach einem der Ansprüche 1 bis 3, **dadurch gekennzeichnet, dass** die Aussparung (4) der Rutsche (3) bis zum unteren Ende (11) des zweiten Abschnitts (10) der Rutsche (3) in Form eines Schlitzes in Förderrichtung (22) verläuft, wobei der Messbereich (23) der Aussparung in Förderrichtung (22) gesehen vom unteren Ende (11) des zweiten Abschnitts (10) der Rutsche (3) entfernt ist, insbesondere am vom unteren Ende (11) des zweiten Abschnitts (10) der Rutsche (3) am weitesten beabstandeten Bereich des Schlitzes (4) angeordnet ist.

5. Sortiervorrichtung (1) nach einem der Ansprüche 1 bis 3, **dadurch gekennzeichnet, dass** sich an die Aussparung (4) in Förderrichtung (22), insbesondere bis zum unteren Ende (11) des zweiten Abschnitts (10) der Rutsche (3), eine Vertiefung anschließt.

6. Sortiervorrichtung (1) nach Anspruch 5, **dadurch gekennzeichnet, dass** die Materialdicke des zweiten Abschnitts (10) zur Bildung der Vertiefung bis auf einen Steg (21) vermindert ist.

7. Sortiervorrichtung (1) nach einem der Ansprüche 1 bis 6, **dadurch gekennzeichnet, dass** der zweite Abschnitt (10) der Rutsche (3) Seitenwände (12) umfasst, die, in einem Schnitt normal zur Förderrichtung (22) betrachtet, senkrecht verlaufen, um ein Objekt (2) auf dem zweiten Abschnitt (10) zu halten.

8. Sortiereinrichtung (1) nach einem der Ansprüche 1 bis 6, **dadurch gekennzeichnet, dass** der zweite Abschnitt (10) der Rutsche (3) keine Seitenwände (12) umfasst.

9. Sortiervorrichtung (1) nach einem der Ansprüche 1 bis 8, **dadurch gekennzeichnet, dass** eine Objekterkennungseinrichtung (5) vorgesehen ist, welche ausgebildet ist, zumindest die Lage eines Objekts (2) auf der Rutsche (3) zu erfassen, und die Objekterkennungseinrichtung (5) in Förderrichtung (22) der Objekte (2) gesehen vor der LIBS-Laservorrichtung (6) angeordnet ist.

10. Sortiervorrichtung (1) nach einem der Ansprüche 1 bis 9, **dadurch gekennzeichnet, dass** die LIBS-Laservorrichtung (6) ausgebildet ist, kontinuierlich Laserstrahlung abzugeben und dass die Sortiervorrichtung (1) weiter einen Laserdump (13) zum Absorbieren der Laserstrahlung umfasst, wobei der Laserdump (13) in Richtung der Laserstrahlung gesehen bezüglich der Rutsche (3) der LIBS-Laservorrichtung (6) gegenüberliegend angeordnet ist.

11. Sortiervorrichtung (1) nach einem der Ansprüche 1 bis 8 oder Anspruch 10, **dadurch gekennzeichnet, dass** eine Objekterkennungseinrichtung (5) vorgesehen ist, welche ausgebildet ist, zumindest die Lage eines Objekts (2) auf der Rutsche (3) zu erfassen, und die Objekterkennungseinrichtung (5) in Förderrichtung (22) der Objekte (2) gesehen nach der LIBS-Laservorrichtung (6) angeordnet ist.

12. Sortiervorrichtung (1) nach einem der Ansprüche 1 bis 11, **dadurch gekennzeichnet, dass** diese derart ausgebildet ist, dass ein Objekt (2) mehrfach spektroskopisch vermessen wird, wobei vorzugsweise zumindest alle 4,5 mm bis 5 mm eine Vermessung des Objekts (2) durchgeführt wird.

13. Sortiervorrichtung (1) nach einem der Ansprüche 1 bis 12, **dadurch gekennzeichnet, dass** die Sortiervorrichtung (1) weiter eine Abstandsmesseinrichtung (14) zur Ermittlung des Abstands der Objekte (2) auf der Rutsche (3) zur LIBS-Laservorrichtung (6) aufweist.

14. Sortiervorrichtung (1) nach einem der Ansprüche 1 bis 13, **dadurch gekennzeichnet, dass** der Übergang vom ersten Abschnitt (9) in den zweiten Abschnitt (10) der Rutsche (3) abrupt ist.

15. Sortiervorrichtung (1) nach einem der Ansprüche 1 bis 14, **dadurch gekennzeichnet, dass** eine zweite Laservorrichtung (16) zum Reinigen der Objekte (2) vorgesehen ist, wobei die zweite Laservorrichtung (16) in Förderrichtung (22) der Objekte (2) gesehen vor der LIBS-Laservorrichtung (6) angeordnet ist.

16. Sortiervorrichtung (1) nach einem der Ansprüche 1 bis 15, **dadurch gekennzeichnet, dass** zumindest zwei Rutschen (3) parallel nebeneinander angeordnet sind.

17. Verfahren zum Sortieren von Objekten mit einer Vorrichtung nach einem der Ansprüche 1 bis 16, wobei das Verfahren die folgenden Schritte umfasst:
a. Vereinzeln der Objekte (2), um die Objekte nacheinander mittels Schwerkraft auf zumindest einer Rutsche (3) zu bewegen;
b. spektroskopische Vermessung der Objekte (2) mittels einer LIBS-Laservorrichtung (6), wobei ein Objekt (2) mehrfach, vorzugsweise zumindest alle 4,5 mm bis 5 mm, spektroskopisch vermessen wird;
c. Aussortieren bestimmter Objekte (2) mittels einer Trenneinrichtung (7).

## Claims

1. Sorting apparatus (1) for sorting objects (2), the sorting apparatus (1) comprising at least
- a chute (3), on which the objects (2) can be moved in succession in a conveying direction (22) by means of the acting gravitational force, wherein the chute (3) has a cutout (4) comprising a measuring region (23),
- a LIBS laser device (6), wherein the LIBS laser device (6) is arranged adjacent to the cutout (4) of the chute (3) in order to carry out, through the cutout (4), a spectroscopic measurement on the objects (2) moving along the chute (3),
- a separating device (7) for separating out certain objects (2), and
- a control device (8) for controlling and/or adjusting the separating device (7) as a function of the measurement results of the LIBS laser device (6), **characterized in that** the chute (3) comprises at least two portions, wherein the first portion (9), through which the objects (2) can be moved first, is designed in such a way that the objects (2) moving along the first portion (9) are centred normal to the conveying direction (22) by means of gravitational force, and the second portion (10) of the chute (3) is designed to be flat, and **in that** the cutout (4) comprising the measuring region (23) is arranged in the second portion (10) of the chute (3).

2. Sorting apparatus (1) according to claim 1, **characterized in that** the first portion (9) is designed to be concave since a conveying surface of the first portion (9), as seen in section normal to the conveying direction (22), is arranged at least partially in an inclined manner, and **in that** the second portion (10) has no conveying surface that is arranged in an inclined manner, as seen in section normal to the conveying direction (22).

3. Sorting apparatus (1) according to any one of claims 1 or 2, **characterized in that** the chute (3) has a width and the second portion (10) of the chute (3) has a lower end (11), and **in that** the measuring region (23) of the cutout (4) is arranged at least half the width of the chute (3) above the lower end (11) of the second portion (10) of the chute (3).

4. Sorting apparatus (1) according to any one of claims 1 to 3, **characterized in that** the cutout (4) of the chute (3) extends in the form of a slot in the conveying direction (22) as far as the lower end (11) of the second portion (10) of the chute (3), wherein the measuring region (23) of the cutout, as seen in the conveying direction (22), is arranged at a distance from the lower end (11) of the second portion (10) of the chute (3), in particular is arranged at the region of the slot (4) located furthest away from the lower end (11) of the second portion (10) of the chute (3).

5. Sorting apparatus (1) according to any one of claims 1 to 3, **characterized in that** a depression adjoins the cutout (4) in the conveying direction (22), in particular as far as the lower end (11) of the second portion (10) of the chute (3).

6. Sorting apparatus (1) according to claim 5, **characterized in that** the material thickness of the second portion (10) is reduced down to a web (21) in order to form the depression.

7. Sorting apparatus (1) according to any one of claims 1 to 6, **characterized in that** the second portion (10) of the chute (3) comprises side walls (12) which extend vertically, as seen in section normal to the conveying direction (22), in order to keep an object (2) on the second portion (10).

8. Sorting apparatus (1) according to any one of claims 1 to 6, **characterized in that** the second portion (10) of the chute (3) comprises no side walls (12).

9. Sorting apparatus (1) according to any one of claims 1 to 8, **characterized in that** an object recognition device (5) is provided, which is designed to detect at least the position of an object (2) on the chute (3), and the object recognition device (5) is arranged upstream of the LIBS laser device (6), as seen in the conveying direction (22) of the objects (2).

10. Sorting apparatus (1) according to any one of claims 1 to 9, **characterized in that** the LIBS laser device (6) is designed to emit laser radiation continuously, and **in that** the sorting apparatus (1) further comprises a laser dump (13) for absorbing the laser radiation, wherein the laser dump (13) is arranged opposite the LIBS laser device (6) with respect to the chute (3), as seen in the direction of the laser radiation.

11. Sorting apparatus (1) according to any one of claims 1 to 8 or claim 10, **characterized in that** an object recognition device (5) is provided, which is designed to detect at least the position of an object (2) on the chute (3), and the object recognition device (5) is arranged downstream of the LIBS laser device (6), as seen in the conveying direction (22) of the objects (2).

12. Sorting apparatus (1) according to any one of claims 1 to 11, **characterized in that** the sorting apparatus is designed in such a way that an object (2) is spectroscopically measured multiple times, wherein a measurement of the object (2) is carried out preferably at least every 4.5 mm to 5 mm.

13. Sorting apparatus (1) according to any one of claims 1 to 12, **characterized in that** the sorting apparatus (1) further comprises a distance measuring device (14) for determining the distance of the objects (2) on the chute (3) from the LIBS laser device (6).

14. Sorting apparatus (1) according to any one of claims 1 to 13, **characterized in that** the transition from the first portion (9) to the second portion (10) of the chute (3) is abrupt.

15. Sorting apparatus (1) according to any one of claims 1 to 14, **characterized in that** a second laser device (16) is provided for cleaning the objects (2), wherein the second laser device (16) is arranged upstream of the LIBS laser device (6), as seen in the conveying direction (22) of the objects (2).

16. Sorting apparatus (1) according to any one of claims 1 to 15, **characterized in that** at least two chutes (3) are arranged parallel to and alongside one another.

17. Method for sorting objects using an apparatus according to any one of claims 1 to 16, the method comprising the following steps:
a. singulating the objects (2) in order to move the objects in succession on at least one chute (3) by means of gravity;
b. spectroscopically measuring the objects (2) by means of a LIBS laser device (6), wherein an object (2) is spectroscopically measured multiple times, preferably at least every 4.5 mm to 5 mm;
c. separating out certain objects (2) by means of a separating device (7).

## Revendications

1. Dispositif de tri (1) pour trier des objets (2), le dispositif de tri (1) comprenant au moins
- une glissière (3) sur laquelle les objets (2) peuvent être déplacés les uns après les autres dans une direction de transport (22) sous l'action de la force de gravitation, la glissière (3) présentant un évidement (4) comprenant une zone de mesure (23),
- un dispositif laser LIBS (6), le dispositif laser LIBS (6) étant disposé au voisinage de l'évidement (4) de la glissière (3), afin d'effectuer une mesure spectroscopique des objets (2) se déplaçant le long de la glissière (3) à travers l'évidement (4),
- un moyen de séparation (7) pour trier certains objets (2), ainsi que
- un moyen de commande (8) pour commander et/ou réguler le moyen de séparation (7) en fonction des résultats de mesure du dispositif laser LIBS (6),
**caractérisé en ce que** la glissière (3) comprend au moins deux parties, la première partie (9), à travers laquelle les objets (2) peuvent être déplacés en premier, étant conçue de manière à ce que les objets (2) se déplaçant le long de la première partie (9) soient centrés normalement à la direction de transport (22) au moyen de la force de gravitation, et la deuxième partie (10) de la glissière (3) étant conçue plane, et **en ce que** l'évidement (4) comprenant la zone de mesure (23) est disposé dans la deuxième partie (10) de la glissière (3) .

2. Dispositif de tri (1) selon la revendication 1, **caractérisé en ce que** la première partie (9) est conçue concave, une surface de transport de la première partie (9), vue dans une coupe normale à la direction de transport (22), étant disposée de manière inclinée au moins sur certaines parties, et **en ce que** la deuxième partie (10) ne présente pas de surface de transport qui, vue dans une coupe normale à la direction de transport (22), est disposée de manière inclinée.

3. Dispositif de tri (1) selon l'une des revendications 1 ou 2, **caractérisé en ce que** la glissière (3) présente une largeur et la deuxième partie (10) de la glissière (3) présente une extrémité inférieure (11) et **en ce que** la zone de mesure (23) de l'évidement (4) est disposée au moins une demi-largeur de la glissière (3) au-dessus de l'extrémité inférieure (11) de la deuxième partie (10) de la glissière (3).

4. Dispositif de tri (1) selon l'une des revendications 1 à 3, **caractérisé en ce que** l'évidement (4) de la glissière (3) s'étend jusqu'à l'extrémité inférieure (11) de la deuxième partie (10) de la glissière (3) sous la forme d'une fente dans la direction de transport (22), la zone de mesure (23) de l'évidement étant éloignée de l'extrémité inférieure (11) de la deuxième partie (10) de la glissière (3), vue dans la direction de transport (22), en particulier étant disposée dans la zone de la fente (4) la plus éloignée de l'extrémité inférieure (11) de la deuxième partie (10) de la glissière (3) .

5. Dispositif de tri (1) selon l'une des revendications 1 à 3, **caractérisé en ce qu'**un renfoncement se raccorde à l'évidement (4) dans la direction de transport (22), en particulier jusqu'à l'extrémité inférieure (11) de la deuxième partie (10) de la glissière (3).

6. Dispositif de tri (1) selon la revendication 5, **caractérisé en ce que** l'épaisseur de matériau de la deuxième partie (10) est réduite jusqu'à une nervure (21) pour former le renfoncement.

7. Dispositif de tri (1) selon l'une des revendications 1 à 6, **caractérisé en ce que** la deuxième partie (10) de la glissière (3) comprend des parois latérales (12) qui, vues dans une coupe normale à la direction de transport (22), s'étendent verticalement pour maintenir un objet (2) sur la deuxième partie (10).

8. Dispositif de tri (1) selon l'une des revendications 1 à 6, **caractérisé en ce que** la deuxième partie (10) de la glissière (3) ne comprend pas de parois latérales (12).

9. Dispositif de tri (1) selon l'une des revendications 1 à 8, **caractérisé en ce qu'**il est prévu un moyen de reconnaissance d'objets (5) qui est conçu pour détecter au moins la position d'un objet (2) sur la glissière (3), et le moyen de reconnaissance d'objets (5) est disposé en amont du dispositif laser LIES (6), vu dans la direction de transport (22) des objets (2).

10. Dispositif de tri (1) selon l'une des revendications 1 à 9, **caractérisé en ce que** le dispositif laser LIBS (6) est conçu pour émettre un rayonnement laser en continu et **en ce que** le dispositif de tri (1) comprend en outre un absorbeur de faisceau laser (13) pour absorber le rayonnement laser, l'absorbeur de faisceau laser (13) étant disposé à l'opposé du dispositif laser LIBS (6) par rapport à la glissière (3), vu dans la direction du rayonnement laser.

11. Dispositif de tri (1) selon l'une des revendications 1 à 8 ou la revendication 10, **caractérisé en ce qu'**il est prévu un moyen de reconnaissance d'objets (5) qui est conçu pour détecter au moins la position d'un objet (2) sur la glissière (3), et le moyen de reconnaissance d'objets (5) est disposé en aval du dispositif laser LIBS (6), vu dans la direction de transport (22) des objets (2).

12. Dispositif de tri (1) selon l'une des revendications 1 à 11, **caractérisé en ce qu'**il est conçu de telle sorte qu'un objet (2) est mesuré plusieurs fois de manière spectroscopique, une mesure de l'objet (2) étant de préférence effectuée au moins tous les 4,5 mm à 5 mm.

13. Dispositif de tri (1) selon l'une des revendications 1 à 12, **caractérisé en ce que** le dispositif de tri (1) présente en outre un moyen de mesure de distance (14) pour déterminer la distance des objets (2) sur la glissière (3) par rapport au dispositif laser LIBS (6).

14. Dispositif de tri (1) selon l'une des revendications 1 à 13, **caractérisé en ce que** la transition entre la première partie (9) et la deuxième partie (10) de la glissière (3) est abrupte.

15. Dispositif de tri (1) selon l'une des revendications 1 à 14, **caractérisé en ce qu'**un deuxième dispositif laser (16) est prévu pour nettoyer les objets (2), le deuxième dispositif laser (16) étant disposé en amont du dispositif laser LIBS (6), vu dans la direction de transport (22) des objets (2).

16. Dispositif de tri (1) selon l'une des revendications 1 à 15, **caractérisé en ce qu'**au moins deux glissières (3) sont disposées parallèlement l'une à côté de l'autre.

17. Procédé de tri d'objets avec un dispositif selon l'une des revendications 1 à 16, ledit procédé comprenant les étapes suivantes :
a. séparation des objets (2) pour déplacer les objets les uns après les autres au moyen de la force de gravitation sur au moins une glissière (3) ;
b. mesure spectroscopique des objets (2) au moyen d'un dispositif laser LIBS (6), un objet (2) étant mesuré plusieurs fois, de préférence au moins tous les 4,5 mm à 5 mm, de manière spectroscopique ;
c. tri de certains objets (2) au moyen d'un moyen de séparation (7).
